# EUROPÄISCHE PATENTSCHRIFT

(11) **EP 3 308 422 B1**
(45) Veröffentlichungstag und Bekanntmachung des Hinweises auf die Patenterteilung: **04.08.2021**
(21) Anmeldenummer: 16726611.3
(22) Anmeldetag: 03.06.2016
(51) Int. Cl.: H01M 8/242, H01M 8/0273, H01M 8/2483, H01M 8/1018, C25B 9/19, C25B 9/73, C25B 9/77

(54) **ELEKTROCHEMISCHE VORRICHTUNG UND VERFAHREN ZUM HERSTELLEN EINER ELEKTROCHEMISCHEN EINHEIT FÜR EINE ELEKTROCHEMISCHE VORRICHTUNG**
ELECTROCHEMICAL DEVICE AND METHOD FOR PRODUCING AN ELECTROCHEMICAL UNIT FOR AN ELECTROCHEMICAL DEVICE
DISPOSITIF ÉLECTROCHIMIQUE ET PROCÉDÉ DE FABRICATION D'UNE UNITÉ ÉLECTROCHIMIQUE POUR UN DISPOSITIF ÉLECTROCHIMIQUE

(30) Priorität: 12.06.2015 DE 102015109393
(43) Veröffentlichungstag der Anmeldung: 18.04.2018
(73) Patentinhaber: ElringKlinger AG, 72581 Dettingen (DE)
(72) Erfinder: STAHL, Peter, 72555 Metzingen (DE); KRAFT, Jürgen, 72555 Metzingen (DE); GÖTZ, Michael, 72581 Dettingen (DE)
(74) Vertreter: Hoeger, Stellrecht & Partner Patentanwälte mbB
(86) Internationale Anmeldenummer: PCT/EP2016/062675
(87) Internationale Veröffentlichungsnummer: WO 2016/198337

(56) Entgegenhaltungen:
- DE-A1-102008 029 628
- US-A1- 2001 019 791
- US-A1- 2001 044 042
- US-A1- 2009 053 573
- US-A1- 2009 311 571

## Beschreibung

Die vorliegende Erfindung betrifft eine elektrochemische Vorrichtung, welche Folgendes umfasst:
einen Stapel aus mehreren, längs einer Stapelrichtung aufeinander folgenden elektrochemischen Einheiten, die jeweils eine elektrochemisch aktive Membran-Elektroden-Anordnung, mindestens eine Gasdiffusionslage und eine Bipolarplatte mit mindestens einem Strömungsfeld für mindestens ein fluides Medium umfassen.

Eine solche elektrochemische Vorrichtung kann insbesondere als ein Brennstoffzellenstapel oder ein Elektrolyseur ausgebildet sein.

In Brennstoffzellenstapeln und in Elektrolyseuren werden in verschiedenen Ebenen einer elektrochemischen Einheit und, je nach Design, auch in verschiedenen Bereichen derselben Ebene unterschiedliche Medien geführt. Diese Medien können insbesondere ein anodisches Fluid (Brenngas), ein kathodisches Fluid (Oxidationsmittel) und gegebenenfalls auch ein fluides Kühlmittel sein.

Diese durch die elektrochemische Vorrichtung geführten Medien dürfen sich weder miteinander vermischen noch aus den elektrochemischen Einheiten austreten, weshalb in mehreren Ebenen Dichtungen erforderlich sind.

Diese Dichtungen können beispielsweise auf der Basis von Elastomermaterialien und Klebungen realisiert werden.

In elektrochemischen Einheiten mit metallischen Bipolarplatten können die Dichtungen vollständig oder teilweise durch Sicken in der Bipolarplatte oder durch Dichtungen auf der Basis von Elastomermaterialien verwirklicht sein.

Die Bipolarplatten (auch Separatoren oder Interkonnektoren genannt) können einteilig ausgebildet sein oder mindestens zwei Einzellagen (Bipolarplattenlagen) umfassen.

Die Bipolarplattenlagen einer mehrlagigen Bipolarplatte können durch Fügeverfahren wie Schweißen oder Kleben miteinander verbunden werden.

Eine Dichtung kann als separate Komponente in den Stapel aus elektrochemischen Einheiten eingelegt oder auf einer Bipolarplatte oder auf einem anderen Bestandteil einer elektrochemischen Einheit, beispielsweise auf einer Gasdiffusionslage oder auf einer Membran-Elektroden-Anordnung, festgelegt sein.

Wegen Vorteilen in der Handhabung und in der Herstellung und wegen der einfachen Dichtungsausführung wird häufig die Festlegung der Dichtung an einer Bipolarplatte bevorzugt. Dies kann beispielsweise durch Anspritzen einer Dichtung, insbesondere aus einem Elastomermaterial, an eine Lage der Bipolarplatte erfolgen.

In dieser Dichtungskonfiguration hat sich die Kombination der an der Bipolarplatte festgelegten Dichtung mit einer im Randbereich der Membran-Elektroden-Anordnung an der Membran-Elektroden-Anordnung (insbesondere an einer katalysatorbeschichteten Membran, CCM) festgelegten Randverstärkungsanordnung als vorteilhaft erwiesen, wobei die Randverstärkungsanordnung als Gegenkomponente für die Dichtung dient, eine nachteilige mechanische Belastung der Membran-Elektroden-Anordnung verhindern hilft und zugleich eine vorteilhafte Anbindung des elektrochemisch aktiven Bereiches der Membran-Elektroden-Anordnung an den Randbereich der Membran-Elektroden-Anordnung sicherstellt.

Eine solche Randverstärkungsanordnung ist beispielsweise in der EP 1 403 949 B1 offenbart.

Eine solche Randverstärkungsanordnung wird auch als Sub-Gasket bezeichnet.

Eine solche Randverstärkungsanordnung kann eine oder mehrere Lagen umfassen, wobei ein üblicher Aufbau zwei Lagen umfasst, die auf zwei einander gegenüberliegenden Seiten der Membran-Elektroden-Anordnung in Form eines umlaufenden Rahmens angeordnet sind.

Bei der Herstellung der elektrochemischen Vorrichtung müssen die Bipolarplatte, die Gasdiffusionslagen, die Membran-Elektroden-Anordnung, die Dichtungen und gegebenenfalls eine Randverstärkungsanordnung (Sub-Gasket) jeder elektrochemischen Einheit relativ zueinander positioniert werden, wobei diese Komponenten einzeln oder als zumindest teilweise bereits miteinander verbundene Unterbaugruppen assembliert werden können.

Wenn eine Dichtung an eine Gasdiffusionslage angebunden ist, erfordert dies sowohl die Positionierung der Gasdiffusionslage für die Applikation der Dichtung als auch die Positionierung der Einheit aus der Gasdiffusionslage und der daran erzeugten Dichtung auf der Bipolarplatte während der Herstellung des Stapels aus elektrochemischen Einheiten.

Wenn die Dichtung auf der Bipolarplatte ausgebildet wird, werden die Membran-Elektroden-Anordnung und die Gasdiffusionslagen entweder als Einzelkomponenten oder als vorassemblierte Einheiten an der Bipolarplatte positioniert.

Die der elektrochemischen Vorrichtung zuzuführenden Medien (kathodisches Fluid, anodisches Fluid, Kühlmittel) werden mittels einer Medienverteilungsstruktur (auch als "Manifold" bezeichnet) mit Medium-Zuführkanälen und Medium-Abführkanälen, welche sich in der Stapelrichtung der elektrochemischen Vorrichtung erstrecken, den verschiedenen Ebenen der elektrochemischen Vorrichtung zugeführt oder aus den verschiedenen Ebenen der elektrochemischen Vorrichtung abgeführt und müssen jeweils aus einem Medium-Zuführkanal dem Strömungsfeld (Flow Field) des betreffenden Mediums in einer elektrochemischen Einheit zugeführt und aus dem Strömungsfeld wieder in einen Medium-Abführkanal abgeführt werden. Dabei müssen sowohl die Medium-Zuführkanäle und Medium-Abführkanäle als auch die Strömungsfelder abgedichtet werden, um sowohl Leckagen in den Außenraum der elektrochemischen Vorrichtung als auch zwischen den Räumen, welche von den verschiedenen Medien durchströmt werden, zu verhindern.

Die Strömungsfelder für die fluiden Medien umfassen Kanal-Steg-Strukturen, welche das betreffende Medium über die Ebene der elektrochemischen Einheit hinweg führen. Jedes Strömungsfeld wird seitlich durch einen um den Außenrand des Strömungsfelds umlaufenden Steg, der im Folgenden Randsteg genannt wird, seitlich begrenzt.

Bei bekannten elektrochemischen Vorrichtungen wird eine das Strömungsfeld abdichtende Dichtung vom Randsteg beabstandet auf der Bipolarplatte appliziert oder assembliert. Dabei entsteht zwischen der Dichtung und dem Randsteg ein Spalt, der im Folgenden als Randkanal bezeichnet wird.

Versuchsergebnisse zeigen, dass im Betrieb der elektrochemischen Vorrichtung eine parasitäre Strömung des Mediums durch den Randkanal um das Strömungsfeld herum und/oder eine zumindest partielle Flutung des Randkanals mit Wasser erfolgen kann (siehe den Artikel von P. Stahl, J. Biesdorf, P. Boillat, J. Kraft und K. A. Friedrich: "Water Distribution Analysis in the Outer Perimeter Region of Technical PEFC Based on Neutron Radiography", erschienen in: Journal of the Electrochemical Society 162(7), Seiten F677 bis F685 (2015)). Hierdurch entsteht im Bereich des Randkanals eine undefinierte Versorgung der Membran-Elektroden-Anordnung mit kathodischem und/oder anodischem Fluid, was die Alterung der Membran-Elektroden-Anordnung in ihrem elektrochemisch aktiven Bereich beschleunigen kann.

Auch wenn elektrochemische Reaktionen im Bereich des Randkanals durch Applikation einer Randverstärkungsanordnung unterbunden werden, so stehen die dennoch durch den Randkanal strömenden Medien nicht für eine elektrochemische Reaktion zur Verfügung. Ferner ist die Applikation der Randverstärkungsanordnung mit einem erhöhten Fertigungs- und Assemblierungsaufwand verbunden.

Die US 2001/044042 A1, die US 2009/053573 A1, die US 2001/019791 A1 und die DE 10 2008 029 628 A1 offenbaren elektrochemische Vorrichtungen, welche einen Stapel aus mehreren, längs einer Stapelrichtung aufeinander folgenden elektrochemischen Einheiten, die jeweils eine elektrochemisch aktive Membran-Elektroden-Anordnung, mindestens eine Gasdiffusionslage und eine Bipolarplatte mit mindestens einem Strömungsfeld für mindestens ein fluides Medium umfassen, umfassen, wobei jeweils mindestens eine Bipolarplatte mindestens einen Randsteg aufweist, der ein Strömungsfeld der Bipolarplatte zumindest abschnittsweise berandet und in Kontakt mit einer der Bipolarplatte benachbarten Gasdiffusionslage steht, und wobei die elektrochemische Vorrichtung ferner mindestens ein Strömungsfeld-Dichtelement umfasst, welches das von dem Randsteg berandete Strömungsfeld abdichtet und in Kontakt mit dem Randsteg und in Kontakt mit der Gasdiffusionslage steht.

Die US 2009/311571 A1 offenbart eine elektrochemische Vorrichtung gemäß dem Oberbegriff von Anspruch 1.

Der vorliegenden Erfindung liegt die Aufgabe zugrunde, eine elektrochemische Vorrichtung der eingangs genannten Art zu schaffen, bei welcher mindestens ein Strömungsfeld in einfacher und zuverlässiger Weise abgedichtet wird und das Entstehen parasitärer Strömungen vermieden wird.

Diese Aufgabe wird durch eine elektrochemische Vorrichtung nach Anspruch 1 gelöst.

Der vorliegenden Erfindung liegt somit das Konzept zugrunde, das Strömungsfeld-Dichtelement unmittelbar an den das Strömungsfeld berandenden Randsteg und an die an dem Randsteg anliegende Gasdiffusionslage anzubinden.

Vorzugsweise ist dabei der Randsteg durchgängig um das Strömungsfeld umlaufend ausgeführt und weist insbesondere keine Unterbrechungen, Absenkungen oder Durchtrittsöffnungen auf, um ein Medium durch den Randsteg hindurch zu leiten.

Vorzugsweise werden die Gasdiffusionslage und das Strömungsfeld-Dichtelement in einem einzigen Prozessschritt gemeinsam an die Bipolarplatte oder an eine Einzellage der Bipolarplatte angebunden. Die Assemblierung der Einheit aus Bipolarplatte, Gasdiffusionslage und Strömungsfeld-Dichtelement durch einen einzigen Handhabungs- und Positioniervorgang minimiert die Anzahl und den Aufwand der erforderlichen Prozessschritte sowie die Anzahl der hierfür erforderlichen Handhabungs- und Positioniervorgänge, wodurch auch mögliche Fehlerquellen reduziert werden.

Bei der Erfindung ist vorgesehen, dass das Strömungsfeld-Dichtelement stoffschlüssig mit dem Randsteg verbunden ist.

Ferner ist vorgesehen, dass das Strömungsfeld-Dichtelement stoffschlüssig mit der Gasdiffusionslage verbunden ist. Insbesondere kann vorgesehen sein, dass das das Strömungsfeld-Dichtelement bildende Elastomermaterial während der Herstellung des Strömungsfeld-Dichtelements in die poröse Gasdiffusionslage eindringt, um die Gasdiffusionslage durch Stoffschluss mit dem Strömungsfeld-Dichtelement zu verbinden.

Das Strömungsfeld-Dichtelement kann insbesondere als ein an den Randsteg und/oder an die Gasdiffusionslage angeformtes Spritzgießteil ausgebildet sein.

Alternativ oder ergänzend hierzu kann vorgesehen sein, dass das Strömungsfeld-Dichtelement durch ein Musterdruckverfahren an dem Randsteg und/oder an der Gasdiffusionslage erzeugt ist.

Bei einer bevorzugten Ausgestaltung der Erfindung ist vorgesehen, dass die Bipolarplatte einen anodenseitigen Randsteg auf ihrer Anodenseite und einen kathodenseitigen Randsteg auf ihrer Kathodenseite aufweist, wobei der anodenseitige Randsteg und der kathodenseitige Randsteg zumindest abschnittsweise in einer senkrecht zur Stapelrichtung verlaufenden Versatzrichtung gegeneinander versetzt sind.

Dabei ist es besonders günstig, wenn die Bipolarplatte in einem zwischen dem anodenseitigen Randsteg und dem kathodenseitigen Randsteg liegenden Zwischenbereich mindestens eine Durchgangsöffnung für den Durchgang eines fluiden Mediums durch die Bipolarplatte hindurch oder in einen Innenraum der Bipolarplatte hinein aufweist.

Eine solche Durchgangsöffnung steht vorzugsweise in Fluidverbindung mit einem Mediumkanal, welcher sich längs der Stapelrichtung durch die Bipolarplatte hindurch erstreckt.

In der erfindungsgemäßen elektrochemischen Vorrichtung kann mindestens eine Membran-Elektroden-Anordnung mit einer Randverstärkungsanordnung (Sub-Gasket) versehen sein, an welcher das Strömungsfeld-Dichtelement abdichtend anliegt.

Zwei in der Stapelrichtung aufeinander folgende Bipolarplatten der elektrochemischen Vorrichtung sind auf einander zugewandten Seiten mit jeweils einem Randsteg versehen, der mit jeweils einem Strömungsfeld-Dichtelement in Kontakt steht, wobei die Strömungsfeld-Dichtelemente, mit denen die Randstege der Bipolarplatten in Kontakt stehen, abdichtend aneinander anliegen.

Dabei sind die beiden in der Stapelrichtung aufeinander folgenden Bipolarplatten im Wesentlichen identisch miteinander ausgebildet, jedoch um eine zur Stapelrichtung parallele Drehachse um einen Winkel von 180° gegeneinander verdreht angeordnet.

Mindestens eine Bipolarplatte mit einem Randsteg, der mit einem Strömungsfeld-Dichtelement in Kontakt steht, kann zwei Bipolarplattenlagen umfassen, die längs Fügelinien, vorzugsweise fluiddicht, miteinander gefügt sind.

Dabei kann insbesondere vorgesehen sein, dass die Bipolarplattenlagen längs der Fügelinien durch Verschweißung und/oder durch Verklebung miteinander gefügt sind.

Bei einer besonderen Ausgestaltung der Erfindung ist vorgesehen, dass das an der Bipolarplatte angeordnete Strömungsfeld-Dichtelement die Fügelinien, an denen die Bipolarplattenlagen der Bipolarplatte miteinander gefügt sind, - in der Stapelrichtung gesehen - nicht überlappt.

Insbesondere ist dabei vorgesehen, dass das Strömungsfeld-Dichtelement die Fügelinien nicht überkreuzt und auch nicht in der Stapelrichtung über oder unter einer der Fügelinien parallel zu derselben verläuft.

Das Strömungsfeld-Dichtelement, welches in Kontakt mit dem Randsteg einer ersten Bipolarplatte und in Kontakt mit einer ersten Gasdiffusionslage steht, liegt abdichtend an einem weiteren Strömungsfeld-Dichtelement an, welches in Kontakt mit einem Randsteg einer zweiten Bipolarplatte, welche der ersten Bipolarplatte gegenüberliegt, und in Kontakt mit einer zweiten Gasdiffusionslage steht.

In einer nicht erfindungsgemäßen Ausgestaltung kann auch vorgesehen sein, dass das Strömungsfeld-Dichtelement, welches in Kontakt mit dem Randsteg einer ersten Bipolarplatte und in Kontakt mit einer ersten Gasdiffusionslage steht, sich bis zu einer der ersten Bipolarplatte gegenüberliegenden zweiten Bipolarplatte erstreckt und vorzugsweise abdichtend an der der ersten Bipolarplatte gegenüberliegenden zweiten Bipolarplatte anliegt.

Dabei dichtet das Strömungsfeld-Dichtelement vorzugsweise zusätzlich zu dem von dem Randsteg der ersten Bipolarplatte berandeten Strömungsfeld der ersten Bipolarplatte auch ein Strömungsfeld der zweiten Bipolarplatte ab. Dabei ist vorzugsweise vorgesehen, dass das Strömungsfeld-Dichtelement stoffschlüssig mit einer Kathodenseite der ersten Bipolarplatte verbunden ist und abdichtend an einer Anodenseite der zweiten Bipolarplatte anliegt. Hierbei ist es nicht erforderlich, dass das Strömungsfeld-Dichtelement in Kontakt mit einem Randsteg der zweiten Bipolarplatte oder in Kontakt mit einer an der zweiten Bipolarplatte anliegenden zweiten Gasdiffusionslage steht.

Das Strömungsfeld-Dichtelement, welches in Kontakt mit dem Randsteg einer ersten Bipolarplatte und in Kontakt mit einer ersten Gasdiffusionslage steht, liegt abdichtend an einem weiteren Strömungsfeld-Dichtelement an, welches in Kontakt mit einer zweiten Gasdiffusionslage steht und abdichtend an einer der ersten Bipolarplatte gegenüberliegenden zweiten Bipolarplatte anliegt.

Dabei ist das erste Strömungsfeld-Dichtelement stoffschlüssig mit der ersten Gasdiffusionslage und das weitere Strömungsfeld-Dichtelement stoffschlüssig mit der zweiten Gasdiffusionslage verbunden.

Dabei steht das erste Strömungsfeld-Dichtelement vorzugsweise in Kontakt mit einer Kathodenseite der ersten Bipolarplatte, und das weitere Strömungsfeld-Dichtelement liegt vorzugsweise abdichtend an einer Anodenseite der zweiten Bipolarplatte an.

Die vorliegende Erfindung betrifft ferner ein Verfahren zum Herstellen einer elektrochemischen Einheit für eine elektrochemische Vorrichtung, in welcher mehrere elektrochemische Einheiten längs einer Stapelrichtung aufeinander folgen,
wobei die elektrochemische Einheit eine elektrochemisch aktive Membran-Elektroden-Anordnung, mindestens eine Gasdiffusionslage und eine Bipolarplatte mit mindestens einem Strömungsfeld für mindestens ein fluides Medium umfasst.

Der vorliegenden Erfindung liegt die weitere Aufgabe zugrunde, ein solches Verfahren zum Herstellen einer elektrochemischen Einheit zu schaffen, welches in einer geringen Zahl von Prozessschritten und mit möglichst wenigen hierfür erforderlichen Handhabungs- und Positioniervorgängen durchführbar ist und dennoch eine zuverlässige Abdichtung des Strömungsfeldes ermöglicht.

Diese Aufgabe wird durch ein Verfahren nach Anspruch 11 gelöst.

Dabei wird das Strömungsfeld-Dichtelement an der Bipolarplatte oder an der Bipolarplattenlage erzeugt, während die Gasdiffusionslage an der Bipolarplatte beziehungsweise an der Bipolarplattenlage angeordnet ist. Es ist vorgesehen, dass die Bipolarplatte mindestens einen Randsteg aufweist, der ein Strömungsfeld der Bipolarplatte zumindest abschnittsweise berandet, wobei die Gasdiffusionslage während der Erzeugung des Strömungsfeld-Dichtelements in Kontakt mit dem Randsteg steht.

Weitere bevorzugte Merkmale des erfindungsgemäßen Verfahrens sind bereits vorstehend im Zusammenhang mit den besonderen Ausführungsformen der erfindungsgemäßen elektrochemischen Vorrichtung erläutert worden.

Gemäß der Erfindung werden die Gasdiffusionslage und das Strömungsfeld-Dichtelement in einem einzigen Prozessschritt gemeinsam an die Bipolarplatte oder an eine Bipolarplattenlage angebunden.

Der um den elektrochemisch aktiven Bereich der elektrochemischen Einheit umlaufende Randsteg wird vorzugsweise durchgängig ausgeführt.

Der Randsteg dient als Anbindungsfläche für die Gasdiffusionslage.

Die Gasdiffusionslage kann den Randsteg teilweise oder vollständig überdecken und/oder über den Randsteg nach außen, also nach außerhalb des Strömungsfeldes, überstehen.

Vorzugsweise ist vorgesehen, dass das Strömungsfeld-Dichtelement einen äußeren Rand der Gasdiffusionslage vollständig umschließt.

Das Strömungsfeld-Dichtelement kann an einer äußeren Flanke und/oder an einem Scheitelbereich des Randsteges an dessen Oberseite angeordnet sein.

Mittels des Randsteges kann eine geschlossene Kavität für die Herstellung des Strömungsfeld-Dichtelements in einem Spritzgießverfahren gebildet werden.

Alternativ oder ergänzend hierzu steht der Randsteg als eine Auflagefläche für das Erzeugen des Strömungsfeld-Dichtelements in einem Auftrageverfahren, wie beispielsweise in einem Musterdruckverfahren, insbesondere einem Siebdruckverfahren, oder in einem CIP("Cured-in-place")-Verfahren zur Verfügung.

Vorzugsweise ist vorgesehen, dass beide - in der Stapelrichtung einander gegenüberliegenden - Seiten der Bipolarplatte jeweils mit einem Randsteg versehen sind.

Die Randstege auf den beiden Seiten der Bipolarplatte (kathodenseitiger Randsteg und anodenseitiger Randsteg) sind vorzugsweise in einer zur Stapelrichtung orthogonalen Ebene abschnittsweise versetzt zueinander angeordnet.

Dadurch entstehen an der Bipolarplatte Zwischenbereiche, die in einer zur Stapelrichtung orthogonalen Ebene zwischen den beiden Randstegen liegen.

Ein Medienstrom zur Zufuhr oder Abfuhr eines fluiden Mediums kann in einem solchen Zwischenbereich unter einem Randsteg hindurch geführt und durch eine Durchgangsöffnung in dem Zwischenbereich zwischen den zwei Randstegen auf die gegenüberliegende Seite der Bipolarplatte geführt werden, wo das Strömungsfeld für das betreffende fluide Medium angeordnet ist.

Hierdurch ist es möglich, die Randstege jeweils durchgängig und/oder ununterbrochen und/oder ohne Durchtrittsöffnungen auszuführen.

Ein fluides Medium, insbesondere ein Kühlmittel, kann durch das Volumen eines Randstegs geführt werden und dadurch über die Breite des Strömungsfelds verteilt werden.

Um eine einseitige Versorgung eines elektrochemisch aktiven Bereiches einer Membran-Elektroden-Anordnung mit anodischem Fluid oder kathodischem Fluid, welche zu einer beschleunigten Alterung der Membran-Elektroden-Anordnung beitragen kann, zu vermeiden, kann vorgesehen sein, dass die Membran-Elektroden-Anordnung an ihrem Umfang mit einer Randverstärkungsanordnung (Sub-Gasket) versehen ist, wobei die Randverstärkungsanordnung vorzugsweise im Bereich der zueinander versetzten Randstege angeordnet ist.

Bei einer besonderen Ausgestaltung der Erfindung ist vorgesehen, dass die Bipolarplatte, das Strömungsfeld-Dichtelement und die Gasdiffusionslage so ausgeführt sind, dass die Abdichtlinien der zu den beiden Seiten einer Membran-Elektroden-Anordnung liegenden Strömungsfeld-Dichtelemente und die Linien, längs welcher die Randstege verlaufen, in der Stapelrichtung gesehen im Wesentlichen deckungsgleich aufeinander liegen.

Die mit fluiden Medien versorgten elektrochemisch aktiven Bereiche zu den beiden Seiten der Membran-Elektroden-Anordnung sind in diesem Fall deckungsgleich, so dass die Verwendung einer Randverstärkungsanordnung zur Vermeidung einer nur einseitigen Medienversorgung des elektrochemisch aktiven Bereiches nicht erforderlich ist.

Die elektrochemisch aktiven Bereiche zweier einander im Stapel benachbarter Membran-Elektroden-Anordnungen sind - in der Stapelrichtung gesehen - in den Bereichen der Medienzufuhr und der Medienabfuhr abschnittsweise nicht deckungsgleich zueinander. In diesen Abschnitten werden die fluiden Medien über eine Ebene der Bipolarplatte, welche der jeweiligen Membran-Elektroden-Anordnung gegenüberliegt, und durch eine Durchgangsöffnung in der Bipolarplatte dem Strömungsfeld für das jeweilige Medium zugeführt.

Die Durchgangsöffnungen in der Bipolarplatte für die Zufuhr oder Abfuhr eines Mediums zu zwei einander im Stapel benachbarten Membran-Elektroden-Anordnungen sind in diesem Fall in einer zur Stapelrichtung orthogonalen Richtung versetzt zueinander angeordnet.

Die Bipolarplatten, Strömungsfeld-Dichtelemente, Gasdiffusionslagen und Membran-Elektroden-Anordnungen zweier einander benachbarter elektrochemischer Einheiten sind im Wesentlichen identisch aufgebaut, werden jedoch um 180° um eine zur Stapelrichtung parallele Drehachse verdreht zueinander aufeinandergestapelt, um den Versatz der Randstege und der Strömungsfeld-Dichtelemente im Bereich der Zuführkanäle und der Abführkanäle für die Medien zu erreichen.

Dies erlaubt die Herstellung eines Stapels aus lauter identisch aufgebauten Bipolarplatten als Gleichteile.

Bei dieser Ausführungsform strömt ein Kühlmittel in einer Zwischenebene zwischen zwei Bipolarplattenlagen in den Innenraum einer Bipolarplatte ein. Die Zufuhr des Kühlmittels in den Innenraum der Bipolarplatte und die Abfuhr des Kühlmittels aus dem Innenraum der Bipolarplatte erfolgt dabei vorzugsweise über die gegenseitige Beabstandung der zwei Bipolarplattenlagen voneinander in einem Bereich, in dem das Strömungsfeld-Dichtelement und das Kanal-Abdichtelement des Kühlmittelkanals den Strömungspfad des Kühlmittels kreuzen.

Der mindestens eine Randsteg kann von einem fluiden Medium, vorzugsweise von einem Kühlmittel, durchströmt werden, um so das fluide Medium über die Fläche der elektrochemischen Einheit zu verteilen.

Um mehr als ein Medium durch das Volumen des Randstegs in das Strömungsfeld führen und verteilen zu können, kann das Volumen des Randstegs durch Auffüllungen unterteilt werden.

Solche Auffüllungen können insbesondere einstückig mit einem Strömungsfeld-Dichtelement ausgebildet sein.

Wenn die Bipolarplatte aus zwei Bipolarplattenlagen gebildet ist, so können die Bipolarplattenlagen durch ein Fügeverfahren wie Schweißen oder Kleben oder auch durch Erzeugen einer Dichtung, beispielsweise aus einem Elastomermaterial, an mindestens einer der Bipolarplattenlagen gegenüber der Umgebung abgedichtet werden.

Solche Dichtungen können auf einer ersten Bipolarplattenlage, auf einer zweiten Bipolarplattenlage oder zum Teil auf der ersten Bipolarplattenlage und zu einem anderen Teil auf der zweiten Bipolarplattenlage erzeugt werden.

Die Dichtungen zum Abdichten des Innenraums der Bipolarplatte können in einem gemeinsamen Prozessschritt mit der Erzeugung der Strömungsfeld-Dichtelemente erzeugt werden.

An den Bipolarplattenlagen können Vertiefungen, insbesondere in Form von Nuten, vorgesehen werden, in welchen die Dichtungsmasse zumindest teilweise aufgenommen wird, um das für die Dichtwirkung erforderliche Dichtungsvolumen aufnehmen zu können.

Bei einer besonderen Ausgestaltung der Erfindung ist vorgesehen, dass die Fügelinien, längs welcher die Bipolarplattenlagen einer Bipolarplatte miteinander gefügt sind, beispielsweise Schweißnähte oder Klebenähte, nicht von Abdichtlinien der an der Bipolarplatte vorgesehenen Dichtelemente gekreuzt oder überlagert werden. Hierdurch ergeben sich Vorteile in Bezug auf die Dichtungsauslegung und die Prozesssicherheit, insbesondere beim Einsatz von Schweißverfahren für das Fügen der Bipolarplattenlagen.

Wenn die Bipolarplattenlagen durch Verklebung miteinander gefügt sind, sind Überschneidungen der Fügelinien der Bipolarplattenlagen mit den Abdichtlinien der an den Bipolarplattenlagen vorgesehenen Dichtelemente möglich. Hierdurch kann insbesondere der Bereich der Medienzufuhr und der Medienabfuhr an der Bipolarplatte deutlich kompakter gestaltet werden. Ferner kann auch der Versatz von zwei im Stapel einander benachbarten Membran-Elektroden-Anordnungen zueinander in diesem Bereich der Medienabfuhr und der Medienzufuhr geringer gewählt werden.

Bei der Herstellung der Einheit aus Gasdiffusionslage, Bipolarplatte oder Bipolarplattenlage und Strömungsfeld-Dichtelement wird vorzugsweise ein äußerer, umlaufender Abschnitt der Gasdiffusionslage in Kontakt mit dem Randsteg an der Bipolarplatte oder an einer Bipolarplattenlage gebracht.

Das Strömungsfeld-Dichtelement, vorzugsweise aus einem Elastomermaterial, wird so erzeugt, dass es mit der Gasdiffusionslage und mit der Bipolarplatte oder der Bipolarplattenlage im Bereich des Randsteges unmittelbar und ohne Spalt verbunden ist.

Wenn die Erzeugung des Strömungsfeld-Dichtelements in einem Spritzgießverfahren erfolgt, so kann eine Abdrückkante eines Spritzgießwerkzeugs auf die Gasdiffusionslage aufgelegt werden, wobei die Gasdiffusionslage durch elastische oder plastische Verformung die Toleranzen des Spritzgießwerkzeugs ausgleicht.

Bei der erfindungsgemäßen elektrochemischen Vorrichtung und dem erfindungsgemäßen Herstellungsverfahren wird das Entstehen eines Randkanals zwischen dem Randsteg und dem Strömungsfeld-Dichtelement durch die unmittelbare Anordnung des Strömungsfeld-Dichtelements an dem Randsteg verhindert. Hierdurch werden eine undefinierte Medienversorgung des elektrochemisch aktiven Bereichs der Membran-Elektroden-Anordnung und die damit verbundenen Alterungseffekte vermieden, und es ist möglich, auf eine Randverstärkungsanordnung am äußeren Randbereich der Membran-Elektroden-Anordnung zu verzichten.

Die vorliegende Erfindung ermöglicht einen sehr kompakten Aufbau des Rand- und Dichtungsbereichs einer elektrochemischen Einheit.

Ferner kann die Einheit aus Bipolarplatte oder Bipolarplattenlage, Gasdiffusionslage und Strömungsfeld-Dichtelement im Assemblierprozess der elektrochemischen Vorrichtung durch einen einzigen Handhabungs- und Positioniervorgang assembliert werden.

Die Membran-Elektroden-Anordnung (mit oder ohne Randverstärkungsanordnung) kann als Rollenware vorliegen und in einem Prozessschritt vor der Assemblierung des Stapels zugeschnitten und assembliert werden.

Die Anzahl und der Aufwand der erforderlichen Prozessschritte sowie die Anzahl und der Aufwand der erforderlichen Handhabungs- und Positioniervorgänge werden dadurch deutlich verringert, und der Assemblierprozess ist weniger fehleranfällig.

Der Randsteg dient bei der Erzeugung des Strömungsfeld-Dichtelements als formgebende und/oder stützende Struktur.

Der Randsteg kann auch zur zumindest teilweisen Aufnahme eines Dichtelements zur Abdichtung des Innenraums der Bipolarplatte gegenüber der Umgebung dienen.

Auffüllungen zur Unterteilung des Volumens eines Randstegs in mehrere Abschnitte, die von verschiedenen Medien durchströmbar sind, können beispielsweise Einlegeteile, separat applizierte Elemente oder in einem gemeinsamen Prozessschritt zusammen mit dem Strömungsfeld-Dichtelement auf die Bipolarplatte oder eine Bipolarplattenlage applizierte Elemente sein.

An der Bipolarplatte oder an einer Bipolarplattenlage können Elemente vorgesehen sein, die der vorläufigen Fixierung der Gasdiffusionslage an der Bipolarplatte beziehungsweise an der Bipolarplattenlage dienen, bis das Strömungsfeld-Dichtelement erzeugt worden ist.

Solche Fixierungselemente können einstückig mit der Bipolarplatte oder der Bipolarplattenlage ausgeformt oder aber von der Bipolarplatte beziehungsweise der Bipolarplattenlage separat ausgebildete Bauteile sein.

Die Fixierung der Gasdiffusionslage an der Bipolarplatte oder der Bipolarplattenlage kann beispielsweise durch Formschluss, Stoffschluss oder Reibschluss bewirkt werden.

Die für die Abdichtung mittels des Strömungsfeld-Dichtelements erforderliche Elastizität kann durch die Verwendung eines Elastomermaterials und/oder durch Verwendung einer Sickenstruktur mit einem daran angeordneten Dichtungsmaterial erzeugt werden. Bei Verwendung einer Sickenstruktur werden durch die plastische Verformung in einem ersten Verpressvorgang makroskopische Unebenheiten und durch die auf der Sickenstruktur angeordnete Dichtung, vorzugsweise aus einem Elastomermaterial, mikroskopische Unebenheiten ausgeglichen.

Das Strömungsfeld-Dichtelement kann flach oder an seiner der Bipolarplatte abgewandten Oberseite profiliert ausgebildet sein, um die für die Dichtwirkung erforderliche Dichtkraft zu senken.

Wenn an einer Bipolarplatte mehrere Strömungsfeld-Dichtelemente vorhanden sind, beispielsweise ein kathodenseitiges Strömungsfeld-Dichtelement und ein anodenseitiges Strömungsfeld-Dichtelement, so können diese Strömungsfeld-Dichtelemente in derselben Weise aufgebaut und erzeugt sein oder aber verschieden aufgebaut und/oder erzeugt sein.

Beispielsweise kann auf der einen Seite der Bipolarplatte ein profiliertes Strömungsfeld-Dichtelement, insbesondere in einem Spritzgießverfahren, erzeugt werden, während auf der gegenüberliegenden Seite der Bipolarplatte ein flach ausgebildetes Strömungsfeld-Dichtelement mittels eines Musterdruckverfahrens, insbesondere eines Siebdruckverfahrens, erzeugt wird.

Bei Anwendung eines Spritzgießverfahrens zum Erzeugen des Strömungsfeld-Dichtelements wird die Gasdiffusionslage durch die Abdrückkante des Spritzgießwerkzeugs vorzugsweise stärker verpresst, als sie während des Betriebes der elektrochemischen Vorrichtung verpresst wird.

Vorzugsweise weist der Randsteg eine ausreichend große Auflagefläche auf, so dass über die Abdrückkante des Spritzgießwerkzeugs die während des Einspritzens des Elastomermaterials erforderliche Abdichtung hergestellt werden kann.

Wenn die Bipolarplatte aus mehreren Bipolarplattenlagen zusammengesetzt ist, so kann die Anbindung einer Gasdiffusionslage und die Erzeugung eines Strömungsfeld-Dichtelements an jeder Bipolarplattenlage separat erfolgen, worauf die Bipolarplattenlagen in einem weiteren Schritt miteinander gefügt werden können. In diesem Fall ist beim Erzeugen des Strömungsfeld-Dichtelements die Abstützung der Bipolarplattenlage mit einem weiteren Spritzgießwerkzeug von der dem zu erzeugenden Dichtelement gegenüberliegenden Seite der Bipolarplattenlage aus möglich.

Grundsätzlich kann aber das mindestens eine Strömungsfeld-Dichtelement auch an der bereits aus mehreren Bipolarplattenlagen gefügten Bipolarplatte erzeugt werden.

Die Steifigkeit der Bipolarplatte sollte dabei ausreichend hoch sein, um den auftretenden Prozesskräften standzuhalten.

Die Gasdiffusionslagen und die Strömungsfeld-Dichtelemente auf den beiden einander gegenüberliegenden Seiten der Bipolarplatte können dabei in einem gemeinsamen Prozessschritt oder auch sequenziell nacheinander appliziert werden.

Eine sequenzielle Applikation kann dabei vorteilhaft sein, wenn die Strömungsfeld-Dichtelemente auf den beiden einander gegenüberliegenden Seiten der Bipolarplatte mit demselben Werkzeug appliziert werden können.

Vorzugsweise wird an beide einander gegenüberliegenden Seiten der Bipolarplatte jeweils eine Gasdiffusionslage mittels eines Strömungsfeld-Dichtelements angebunden.

Grundsätzlich kann aber auch vorgesehen sein, dass nur eine Gasdiffusionslage an einer Seite der Bipolarplatte mittels eines Strömungsfeld-Dichtelements angebunden wird, wobei dann die zweite Gasdiffusionslage beim Assembliervorgang der elektrochemischen Vorrichtung separat auf der gegenüberliegenden Seite der Bipolarplatte eingelegt wird.

Wenn mehrere Bipolarplattenlagen einer Bipolarplatte durch ein Schweißverfahren miteinander gefügt werden, können die Bipolarplattenlagen vor oder nach dem Erzeugen der Strömungsfeld-Dichtelemente miteinander verschweißt werden, wenn die Strömungsfeld-Dichtelemente sich nicht mit den Schweißnähten überlappen. In diesem Fall sind auch nach dem Erzeugen der Strömungsfeld-Dichtelemente noch alle Fügestellen von mindestens einer Seite der Bipolarplatte aus zugänglich.

Wenn mehrere Bipolarplattenlagen durch Verklebung miteinander gefügt werden, werden die Bipolarplattenlagen vorzugsweise nach dem Erzeugen der Strömungsfeld-Dichtelemente an den einzelnen Bipolarplattenlagen miteinander gefügt. Dabei können sich die Fügelinien - in der Stapelrichtung gesehen - mit den Strömungsfeld-Dichtelementen und mit Kanal-Abdichtelementen an den Bipolarplattenlagen überlappen, was einen deutlich kompakteren Aufbau der Bipolarplatte im Bereich der Dichtungselemente ermöglicht.

Weitere Merkmale und Vorteile der Erfindung sind Gegenstand der nachfolgenden Beschreibung und der zeichnerischen Darstellung von Ausführungsbeispielen gemäß der Erfindung und von Vergleichsbeispielen.

In den Zeichnungen zeigen:
- Fig. 1: eine ausschnittsweise schematische Draufsicht von oben auf eine Anodenseite einer Bipolarplatte einer elektrochemischen Einheit einer mehrere längs einer Stapelrichtung aufeinander folgende elektrochemische Einheiten umfassenden elektrochemischen Vorrichtung, wobei die Darstellung einen Bereich einer Medienzufuhr oder Medienabfuhr und einen Teil eines anodenseitigen Strömungsfelds der Bipolarplatte zeigt;
- Fig. 2: eine ausschnittsweise schematische Draufsicht von unten auf eine Kathodenseite der Bipolarplatte aus Fig. 1, welche denselben Bereich der Medienzufuhr oder Medienabfuhr und einen Ausschnitt eines gegenüberliegenden kathodenseitigen Strömungsfelds zeigt;
- Fig. 3: einen schematischen Längsschnitt durch die die Bipolarplatte aus den Fig. 1 und 2 enthaltende elektrochemische Vorrichtung im Bereich einer Abfuhr eines kathodischen Fluids, längs der Linie 3 - 3 in Fig. 1;
- Fig. 4: einen schematischen Längsschnitt durch die die Bipolarplatte aus den Fig. 1 und 2 enthaltende elektrochemische Vorrichtung im Bereich einer Zufuhr eines anodischen Fluids, längs der Linie 4 - 4 in Fig. 1;
- Fig. 5: einen schematischen Längsschnitt durch die die Bipolarplatte aus den Fig. 1 und 2 enthaltende elektrochemische Vorrichtung im Bereich einer Kühlmittelzufuhr, längs der Linie 5 - 5 in Fig. 1;
- Fig. 6: eine schematische Draufsicht auf die Kathodenseite einer erfindungsgemäßen Ausführungsform einer Bipolarplatte einer mehrere längs einer Stapelrichtung aufeinander folgende elektrochemische Einheiten umfassenden elektrochemischen Vorrichtung;
- Fig. 7: eine schematische Draufsicht auf die Anodenseite der Bipolarplatte aus Fig. 6;
- Fig. 8: einen schematischen Schnitt durch die die Bipolarplatte aus den Fig. 6 und 7 enthaltende elektrochemische Vorrichtung im Bereich einer Zufuhr eines kathodischen Fluids zu einem ersten Satz von Membran-Elektroden-Anordnungen, längs der Linie 8 - 8 in Fig. 6;
- Fig. 9: einen schematischen Schnitt durch die die Bipolarplatte aus den Fig. 6 und 7 enthaltende elektrochemische Vorrichtung im Bereich einer Zufuhr eines kathodischen Fluids zu einem zweiten Satz von Membran-Elektroden-Anordnungen, längs der Linie 9 - 9 in Fig. 6;
- Fig. 10: einen schematischen Schnitt durch die die Bipolarplatte aus den Fig. 6 und 7 enthaltende elektrochemische Vorrichtung im Bereich einer Abfuhr eines anodischen Fluids von dem zweiten Satz von Membran-Elektroden-Anordnungen, längs der Linie 10 - 10 in Fig. 6;
- Fig. 11: einen schematischen Schnitt durch die die Bipolarplatte aus den Fig. 6 und 7 enthaltende elektrochemische Vorrichtung im Bereich einer Abfuhr eines anodischen Fluids von dem ersten Satz von Membran-Elektroden-Anordnungen, längs der Linie 11 - 11 in Fig. 6;
- Fig. 12: einen schematischen Schnitt durch die die Bipolarplatte aus den Fig. 6 und 7 enthaltende elektrochemische Vorrichtung im Bereich einer Kühlmittelzufuhr, längs der Linie 12 - 12 in Fig. 6;
- Fig. 13: einen schematischen Schnitt durch eine Bipolarplattenlage mit einem Randsteg, eine in Kontakt mit dem Randsteg stehende Gasdiffusionslage und ein in Kontakt mit dem Randsteg und mit der Gasdiffusionslage stehendes Strömungsfeld-Dichtelement sowie Werkzeugteile eines Spritzgieß-Werkzeugs zum Erzeugen des Strömungsfeld-Dichtelements;
- Fig. 14: einen schematischen Schnitt durch eine Bipolarplatte mit einem Randsteg, eine in Kontakt mit dem Randsteg stehende Gasdiffusionslage und ein in Kontakt mit dem Randsteg und in Kontakt mit der Gasdiffusionslage stehendes Strömungsfeld-Dichtelement, das mit einer oder mehreren Dichtlippen versehen ist;
- Fig. 15: einen schematischen Schnitt durch eine Bipolarplatte mit einem Randsteg, eine in Kontakt mit dem Randsteg stehende Gasdiffusionslage und ein in Kontakt mit dem Randsteg und in Kontakt mit der Gasdiffusionslage stehendes Strömungsfeld-Dichtelement, das in Form einer CIP("Cured-in-place")-Raupe ausgebildet ist;
- Fig. 16: einen schematischen Schnitt durch eine Bipolarplattenlage mit einem Randsteg, eine in Kontakt mit dem Randsteg stehende Gasdiffusionslage und ein in Kontakt mit dem Randsteg und in Kontakt mit der Gasdiffusionslage stehendes Strömungsfeld-Dichtelement, das durch Spritzgießen erzeugt worden ist;
- Fig. 17: eine schematische Draufsicht auf die kühlmittelseitige Innenseite einer kathodenseitigen Bipolarplattenlage einer zweiten erfindungsgemäßen Ausführungsform einer Bipolarplatte;
- Fig. 18: eine schematische Draufsicht auf die kühlmittelseitige Innenseite einer anodenseitigen Bipolarplattenlage der zweiten erfindungsgemäßen Ausführungsform einer Bipolarplatte;
- Fig. 19: einen schematischen Schnitt durch die die Bipolarplattenlagen aus den Fig. 17 und 18 enthaltende elektrochemische Vorrichtung längs der Linie 19 - 19 in Fig. 17, wobei im fertig montierten Zustand der Bipolarplatte miteinander gefügte kathodenseitige und anodenseitige Bipolarplattenlagen längs der Stapelrichtung voneinander beabstandet dargestellt sind, um zu verdeutlichen, dass die Kühlmittel-Dichtelemente im Innenraum der Bipolarplatte jeweils nur mit einer der Bipolarplattenlagen stoffschlüssig verbunden sind;
- Fig. 20: einen der Fig. 8 entsprechenden schematischen Schnitt durch eine elektrochemische Vorrichtung, welche eine dritte erfindungsgemäße Ausführungsform einer Bipolarplatte enthält, bei welcher die kathodenseitige Bipolarplattenlage und die anodenseitige Bipolarplattenlage nicht durch Verschweißung, sondern durch Verklebung miteinander gefügt sind, im Bereich einer Zufuhr eines kathodischen Fluids zu einem ersten Satz von Membran-Elektroden-Anordnungen;
- Fig. 21: einen schematischen Schnitt durch einen Randbereich einer Membran-Elektroden-Anordnung, die mit einer Randverstärkungsanordnung aus zwei Randverstärkungslagen versehen ist, zwei Gasdiffusionslagen und zwei Strömungsfeld-Dichtelemente, die gemäß dem Stand der Technik im Abstand von den Gasdiffusionslagen an der Randverstärkungsanordnung angeordnet sind;
- Fig. 22: einen schematischen Schnitt durch einen Randbereich einer Membran-Elektroden-Anordnung, zwei Gasdiffusionslagen, zwei Bipolarplattenlagen mit jeweils einem Randsteg und zwei Strömungsfeld-Dichtelemente, die erfindungsgemäß in Kontakt mit jeweils einem Randsteg und jeweils einer Gasdiffusionslage stehen;
- Fig. 23: einen schematischen Schnitt durch einen Randbereich einer Membran-Elektroden-Anordnung, zwei Gasdiffusionslagen, zwei Bipolarplattenlagen mit jeweils einem Randsteg und ein Strömungsfeld-Dichtelement, das in Kontakt mit einem ersten Randsteg einer ersten Bipolarplatte und in Kontakt mit einer ersten Gasdiffusionslage steht und sich von der ersten Bipolarplatte bis zu einer der ersten Bipolarplatte gegenüberliegenden zweiten Bipolarplatte erstreckt und an derselben abdichtend anliegt; und

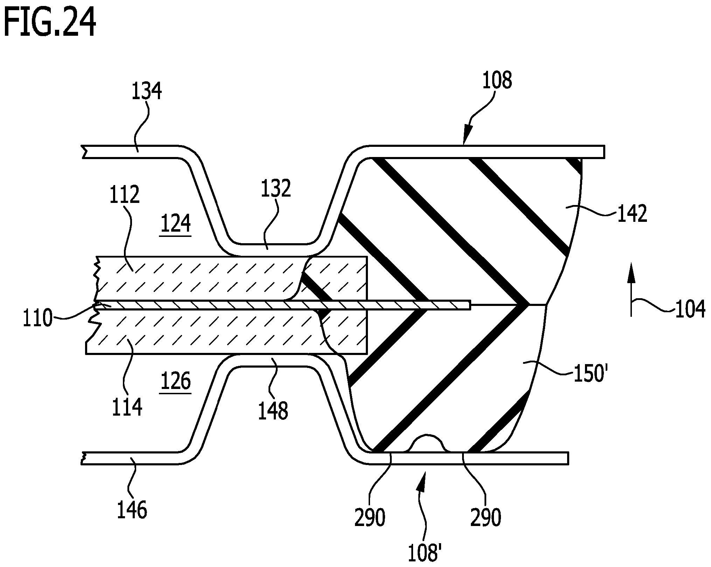

- Fig. 24: einen schematischen Schnitt durch einen Randbereich einer Membran-Elektroden-Anordnung, zwei Gasdiffusionslagen, zwei Bipolarplattenlagen mit jeweils einem Randsteg und zwei Strömungsfeld-Dichtelemente, wobei ein erstes Strömungsfeld-Dichtelement in Kontakt mit einem ersten Randsteg einer ersten Bipolarplatte und in Kontakt mit einer ersten Gasdiffusionslage steht und abdichtend an dem zweiten Strömungsfeld-Dichtelement anliegt, welches seinerseits in Kontakt mit der zweiten Gasdiffusionslage steht und abdichtend an der der ersten Bipolarplatte gegenüberliegenden zweiten Bipolarplatte anliegt, jedoch von dem zweiten Randsteg der zweiten Bipolarplatte beabstandet ist.

Gleiche oder funktional äquivalente Elemente sind in allen Figuren mit denselben Bezugszeichen bezeichnet.

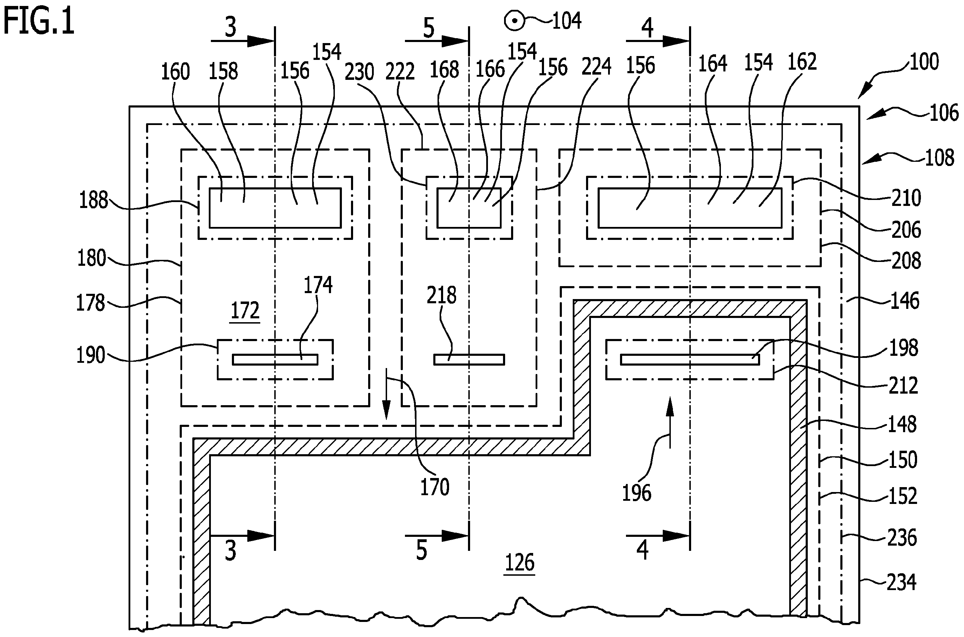

Eine in den Fig. 1 bis 5 dargestellte, als Ganzes mit 100 bezeichnete elektrochemische Vorrichtung, beispielsweise ein Brennstoffzellenstapel oder ein Elektrolyseur, umfasst einen Stapel, der mehrere in einer Stapelrichtung 104 aufeinander folgende elektrochemische Einheiten 106, beispielsweise Brennstoffzelleneinheiten oder Elektrolyseeinheiten, und eine (nicht dargestellte) Spannvorrichtung zum Beaufschlagen der elektrochemischen Einheiten mit einer längs der Stapelrichtung 104 gerichteten Spannkraft umfasst.

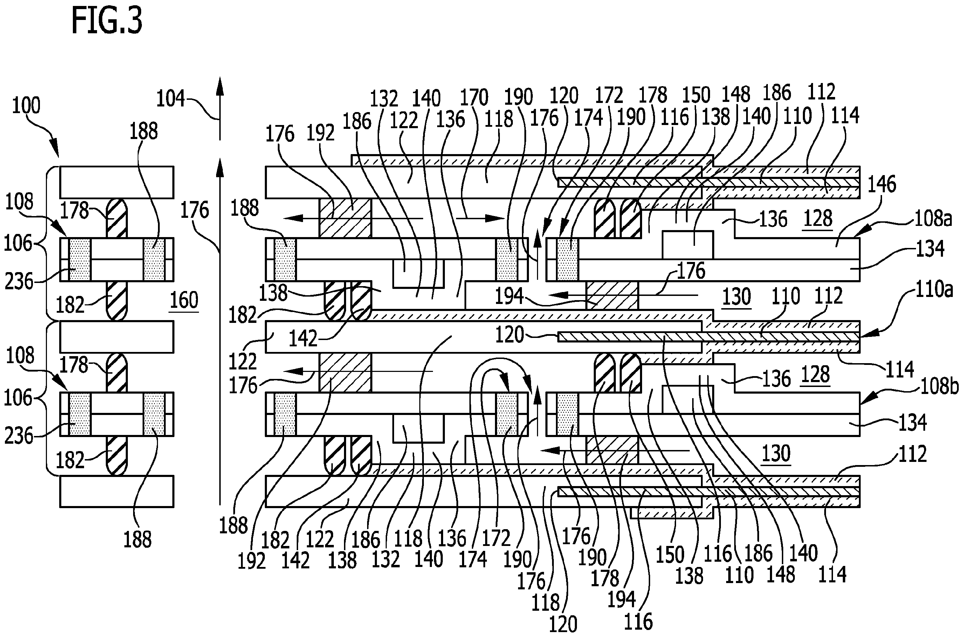

Wie am besten aus den Fig. 3 bis 5 zu ersehen ist, umfasst jede elektrochemische Einheit 106 der elektrochemischen Vorrichtung 100 jeweils eine Bipolarplatte 108, eine Membran-Elektroden-Anordnung (MEA) 110, eine kathodenseitige Gasdiffusionslage 112, die auf der Kathodenseite der Membran-Elektroden-Anordnung 110 angeordnet ist, und eine anodenseitige Gasdiffusionslage 114, die auf der Anodenseite der Membran-Elektroden-Anordnung 110 angeordnet ist.

Bei der in den Fig. 1 bis 5 dargestellten elektrochemischen Vorrichtung 100 ist jede Membran-Elektroden-Anordnung 110 an ihrem äußeren Randbereich 116 mit einer Randverstärkungsanordnung 118 versehen, die vorzugsweise stoffschlüssig, insbesondere durch Heißlaminieren und/oder Kleben, an der Membran-Elektroden-Anordnung 110 festgelegt ist. Die Randverstärkungsanordnung 118 wird auch als Sub-Gasket bezeichnet. Eine solche Randverstärkungsanordnung 118 kann beispielsweise zwei Randverstärkungslagen, insbesondere in Form von Randverstärkungsfolien, umfassen, wobei eine kathodenseitige Randverstärkungslage an der Kathodenseite der Membran-Elektroden-Anordnung 110 anliegt, während eine anodenseitige Randverstärkungslage an der Anodenseite der Membran-Elektroden-Anordnung 110 anliegt und die beiden Randverstärkungslagen in einem über einen äußeren Rand 120 der Membran-Elektroden-Anordnung 110 überstehenden Überstandsbereich 122, vorzugsweise stoffschlüssig, insbesondere durch Heißlaminieren und/oder Kleben, aneinander festgelegt sind.

In den Fig. 3 bis 5 sind die Randverstärkungslagen der Randverstärkungsanordnung 118 im Sinne einer vereinfachten Darstellung nur als Einheit und nicht separat dargestellt.

Jede der Randverstärkungslagen der Randverstärkungsanordnung 118 kann aus einem thermoplastischen, duroplastischen oder elastomeren Polymer gebildet sein, welches vorzugsweise ein Polytetrafluorethylen, ein Polyvinylidenfluorid, einen Polyester, ein Polyamid, ein Copolyamid, ein Polyamid-Elastomer, ein Polyimid, ein Polyurethan, ein Polyurethan-Elastomer, ein Silikon, einen Silikonkautschuk und/oder ein Silikon-basiertes Elastomer umfasst.

Die Membran-Elektroden-Anordnung 110 umfasst eine der kathodenseitigen Gasdiffusionslage 112 zugewandte Kathode, eine der anodenseitigen Gasdiffusionslage 114 zugewandte Anode und eine zwischen der Kathode und der Anode angeordnete Elektrolytmembran, insbesondere eine Polymerelektrolytmembran.

Dieser dreilagige Aufbau der Membran-Elektroden-Anordnung 110 ist in den Zeichnungen aus Vereinfachungsgründen nicht dargestellt.

Die kathodenseitige Gasdiffusionslage 112 ist aus einem gasdurchlässigen Material gebildet und dient dem Durchtritt eines kathodischen Fluids, insbesondere eines Oxidationsmittels, aus den Kanälen eines kathodenseitigen Strömungsfelds 124 einer der Membran-Elektroden-Anordnung 110 benachbarten Bipolarplatte 108a, welche in der Stapelrichtung 104 auf die Membran-Elektroden-Anordnung 110a folgt und mit der kathodenseitigen Gasdiffusionslage 112 in Kontakt steht, zu der Kathode der Membran-Elektroden-Anordnung 110.

Die anodenseitige Gasdiffusionslage 114 ist ebenfalls aus einem gasdurchlässigen Material gebildet und dient dem Durchtritt eines anodischen Fluids, insbesondere eines Brenngases, aus den Kanälen eines anodenseitigen Strömungsfelds 126 einer in der Stapelrichtung 104 unter der Membran-Elektroden-Anordnung 110 angeordneten Bipolarplatte 108b, welche mit der anodenseitigen Gasdiffusionslage 114 in Kontakt steht, zu der Anode der Membran-Elektroden-Anordnung 110.

Die anodenseitige Gasdiffusionslage 114 und die benachbarte Bipolarplatte 108b umschließen gemeinsam einen anodenseitigen Fluidraum 128 der elektrochemischen Einheit 106.

Die kathodenseitige Gasdiffusionslage 112 und die derselben benachbarte Bipolarplatte 108a umschließen zusammen einen kathodenseitigen Fluidraum 130 der elektrochemischen Einheit 106.

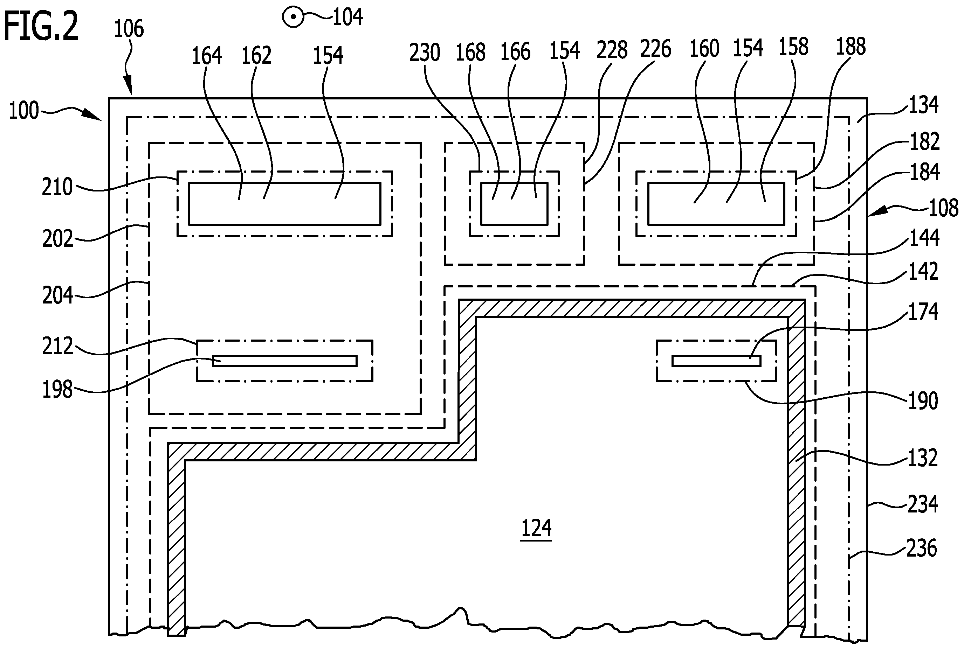

Wie am besten aus Fig. 2 zu ersehen ist, ist das kathodenseitige Strömungsfeld 124 jeder Bipolarplatte von einem kathodenseitigen Randsteg 132 berandet, welcher vorzugsweise durchgehend ausgebildet ist und das ganze kathodenseitige Strömungsfeld 124 umschließt.

Wie beispielsweise aus Fig. 3 zu ersehen ist, ist der kathodenseitige Randsteg 132 beispielsweise in Form einer Sicke an einer kathodenseitigen Bipolarplattenlage 134 der Bipolarplatte 108 ausgebildet.

Der Randsteg 132 kann insbesondere eine dem Strömungsfeld 124 zugewandte innere Flanke 136, eine dem Strömungsfeld 124 abgewandte äußere Flanke 138 und einen die äußere Flanke 138 mit der inneren Flanke 136 verbindenden Scheitelbereich 140 umfassen.

Die Bipolarplatte 108 ist vorzugsweise aus einem elastisch und/oder plastisch verformbaren metallischen Material gebildet.

Um das kathodenseitige Strömungsfeld 124 und den kathodenseitigen Fluidraum 130 nach außen hin fluiddicht abzudichten, ist an der Kathodenseite der Bipolarplatte 108 ein kathodenseitiges Strömungsfeld-Dichtelement 142 angeordnet, welches sich längs einer Abdichtlinie 144 um den kathodenseitigen Randsteg 132 und das kathodenseitige Strömungsfeld 124 herum erstreckt.

Das Strömungsfeld-Dichtelement 142 steht in Kontakt mit dem kathodenseitigen Randsteg 132 und in Kontakt mit der kathodenseitigen Gasdiffusionslage 112, welche an dem Scheitelbereich 140 des kathodenseitigen Randstegs 132 anliegt und sich über diesen hinweg bis zu dem kathodenseitigen Strömungsfeld-Dichtelement 142 erstreckt.

Vorzugsweise ist das kathodenseitige Strömungsfeld-Dichtelement 142 stoffschlüssig mit dem kathodenseitigen Randsteg 132, vorzugsweise mit dessen äußerer Flanke 138, und stoffschlüssig mit der kathodenseitigen Gasdiffusionslage 112 verbunden.

Im montierten Zustand der elektrochemischen Vorrichtung 100 liegt das kathodenseitige Strömungsfeld-Dichtelement 142 fluiddicht abdichtend an der Randverstärkungsanordnung 118 an, welche an derjenigen Membran-Elektroden-Anordnung 110 festgelegt ist, an der die kathodenseitige Gasdiffusionslage 112 anliegt, mit welcher das kathodenseitige Strömungsfeld-Dichtelement 142 in Kontakt steht.

Das anodenseitige Strömungsfeld 126 der Bipolarplatte 108 ist von einem anodenseitigen Randsteg 148 berandet, der insbesondere als eine Sicke an einer anodenseitigen Bipolarplattenlage 146 der Bipolarplatte 108 ausgebildet sein kann und sich vorzugsweise durchgehend um das anodenseitige Strömungsfeld 126 herum erstreckt.

Der anodenseitige Randsteg 148 ist vorzugsweise mit im Wesentlichen demselben Querschnitt wie der kathodenseitige Randsteg 132 ausgebildet und kann insbesondere eine dem anodenseitigen Strömungsfeld 126 zugewandte innere Flanke 136 und eine dem anodenseitigen Strömungsfeld 126 abgewandte äußere Flanke 138 sowie einen die äußere Flanke 138 mit der inneren Flanke 136 verbindenden Scheitelbereich 140 umfassen.

Zur Abdichtung des anodenseitigen Strömungsfelds 126 und des anodenseitigen Fluidraums 128 nach außen ist an der anodenseitigen Bipolarplattenlage 146 ein anodenseitiges Strömungsfeld-Dichtelement 150 vorgesehen, welches sich um den anodenseitigen Randsteg 148 und das anodenseitige Strömungsfeld 126 längs einer Abdichtlinie 152 herum erstreckt.

Das anodenseitige Strömungsfeld-Dichtelement 150 steht in Kontakt mit dem anodenseitigen Randsteg 148, insbesondere mit dessen äußerer Flanke 138, und steht in Kontakt mit der anodenseitigen Gasdiffusionslage 114, welche sich über den Scheitelbereich 140 des anodenseitigen Randstegs 148 hinweg bis zu dem anodenseitigen Strömungsfeld-Dichtelement 150 erstreckt. Vorzugsweise ist das anodenseitige Strömungsfeld-Dichtelement 150 mit dem anodenseitigen Randsteg 148 und mit der anodenseitigen Gasdiffusionslage 114 stoffschlüssig verbunden.

Das anodenseitige Strömungsfeld-Dichtelement 150 liegt fluiddicht abdichtend an der Randverstärkungsanordnung 118 an, welche an derjenigen Membran-Elektroden-Anordnung 110 festgelegt ist, an der die anodenseitige Gasdiffusionslage 114 anliegt, mit welcher das anodenseitige Strömungsfeld-Dichtelement 150 in Kontakt steht.

Die einander gegenüberliegenden Endbereiche jeder Bipolarplatte 108 weisen mehrere Medium-Durchtrittsöffnungen 154 auf, durch welche jeweils ein der elektrochemischen Vorrichtung 100 zuzuführendes fluides Medium (insbesondere ein der Kathode der Membran-Elektroden-Anordnungen 110 zuzuführendes kathodisches Fluid, ein der Anode der Membran-Elektroden-Anordnungen 110 zuzuführendes anodisches Fluid oder ein Kühlmittel) durch die Bipolarplatte 108 hindurchtreten kann.

Die Medium-Durchtrittsöffnungen 154 der im Stapel aufeinander folgenden Bipolarplatten 108 und die in der Stapelrichtung 104 zwischen den Medium-Durchtrittsöffnungen 154 liegenden Zwischenräume bilden zusammen jeweils einen Mediumkanal 156.

Jedem Mediumkanal 156, durch welchen ein fluides Medium der elektrochemischen Vorrichtung 100 zuführbar ist, ist jeweils mindestens ein anderer Mediumkanal zugeordnet, durch welchen das betreffende fluide Medium aus der elektrochemischen Vorrichtung 100 abführbar ist.

Dabei steht jeder Mediumkanal 156 in Fluidverbindung mit einem dem betreffenden Medium zugeordneten Strömungsfeld 124, 126 der Bipolarplatte 108, so dass das Medium aus dem ersten Mediumkanal 156 quer, vorzugsweise im Wesentlichen senkrecht, zu der Stapelrichtung 104 zu dem zweiten Mediumkanal strömen kann.

Wie aus den Fig. 1 und 2 zu ersehen ist, umfasst jede Bipolarplatte 108 insbesondere eine Durchtrittsöffnung 158 für kathodisches Fluid, welche einen Bestandteil eines die elektrochemische Vorrichtung 100 durchsetzenden Abführkanals 160 für kathodisches Fluid bildet, eine Durchtrittsöffnung 162 für anodisches Fluid, welche einen Bestandteil eines die elektrochemische Vorrichtung 100 durchsetzenden Zuführkanals 164 für anodisches Fluid bildet, und eine Durchtrittsöffnung 166 für Kühlmittel, welche einen Bestandteil eines die elektrochemische Vorrichtung 100 durchsetzenden Zuführkanals 168 für Kühlmittel bildet.

Wie am besten aus Fig. 3 zu ersehen ist, ist der anodenseitige Randsteg 148 der Bipolarplatte 108 mit dem anodenseitigen Strömungsfeld-Dichtelement 150 in der Nähe der Durchtrittsöffnung 158 für kathodisches Fluid gegenüber dem kathodenseitigen Randsteg 132 mit dem kathodenseitigen Strömungsfeld-Dichtelement 142 längs einer senkrecht zur Stapelrichtung 104 gerichteten Versatzrichtung 170 von der Durchtrittsöffnung 158 für kathodisches Fluid weg versetzt.

In dem zwischen dem anodenseitigen Strömungsfeld-Dichtelement 150 und dem kathodenseitigen Strömungsfeld-Dichtelement 142 liegenden Zwischenbereich 172 der Bipolarplatte 108 ist eine Durchgangsöffnung 174 für kathodisches Fluid an der Bipolarplatte 108 vorgesehen, durch welche kathodisches Fluid aus dem kathodenseitigen Fluidraum 130 von der Kathodenseite der Bipolarplatte 108 zu der Anodenseite der Bipolarplatte 108 und von dort in den Abführkanal 160 für kathodisches Fluid gelangen kann.

Die Strömungsrichtung des kathodischen Fluids aus den kathodenseitigen Fluidräumen 130 der elektrochemischen Einheiten 106 zu dem Abführkanal 160 für kathodisches Fluid und innerhalb des Abführkanals 160 für kathodisches Fluid ist in Fig. 3 durch die Pfeile 176 angegeben.

Die Strömung des kathodischen Fluids erfolgt also durch die Durchgangsöffnung 174 für kathodisches Fluid in der Bipolarplatte 108 hindurch und über den kathodenseitigen Randsteg 132 der Bipolarplatte 108 hinweg.

Zur Abdichtung des Abführkanals 160 für kathodisches Fluid und des Strömungsweges des kathodischen Fluids von dem kathodenseitigen Fluidraum 130 bis in den Abführkanal 160 ist an der Anodenseite der Bipolarplatte 108 ein anodenseitiges Kanal-Abdichtelement 178 vorgesehen, welches sich längs einer Abdichtlinie 180 (siehe Fig. 1) um die Durchtrittsöffnung 158 für kathodisches Fluid und um die Durchgangsöffnung 174 für kathodisches Fluid herum erstreckt.

Das anodenseitige Kanal-Abdichtelement 178 ist, vorzugsweise stoffschlüssig, an der Bipolarplatte 108 festgelegt und liegt fluiddicht abdichtend an einer der anodenseitigen Bipolarplattenlage 146 benachbarten Randverstärkungsanordnung 118 an.

Ferner ist zur Abdichtung des Abführkanals 160 für kathodisches Fluid auf der Kathodenseite der Bipolarplatte 108 ein kathodenseitiges Kanal-Abdichtelement 182 vorgesehen, welches sich längs einer Abdichtlinie 184 (siehe Fig. 2) um die Durchtrittsöffnung 158 für kathodisches Fluid herum erstreckt.

Das kathodenseitige Kanal-Abdichtelement 182 ist, vorzugsweise stoffschlüssig, an der kathodenseitigen Bipolarplattenlage 134 festgelegt und liegt fluiddicht abdichtend an einer der kathodenseitigen Bipolarplattenlage 134 benachbarten Randverstärkungsanordnung 118 an.

Zur Abdichtung gegenüber einem Innenraum 186 der jeweiligen Bipolarplatte 108, welcher im Betrieb der elektrochemischen Vorrichtung 100 mit einem Kühlmittel gefüllt ist, sind die anodenseitige Bipolarplattenlage 146 und die kathodenseitige Bipolarplattenlage 134 fluiddicht miteinander gefügt längs einer Fügelinie 188, welche sich um die Durchtrittsöffnung 158 für kathodisches Fluid herum erstreckt, und mittels einer Fügelinie 190, welche sich um die Durchgangsöffnung 174 für kathodisches Fluid herum streckt (siehe die Fig. 1 und 2).

Diese Fügelinien 188 und 190 sind bei der in den Fig. 1 bis 5 dargestellten elektrochemischen Vorrichtung vorzugsweise als Schweißlinien, insbesondere als Widerstandsschweißlinien oder als Laserschweißlinien, ausgebildet.

Zur Abstützung der Bipolarplatte 108 auf ihrer Anodenseite, an den Stellen, welche dem Bereich gegenüberliegen, in dem das kathodenseitige Kanal-Abdichtelement 182 und das kathodenseitige Strömungsfeld-Dichtelement 142 benachbart zueinander verlaufen, sind auf der Anodenseite der Bipolarplatte 108 ein oder mehrere Abstützelemente 192 angeordnet.

Die Abstützelemente 192 können beispielsweise jeweils als eine in die anodenseitige Bipolarplattenlage 146 eingeformte Erhebung ausgebildet sein.

Alternativ hierzu ist es auch möglich, dass mindestens ein solches Abstützelement 192 als ein separat von der Bipolarplatte 108 hergestelltes und bei der Montage der elektrochemischen Vorrichtung 100 zwischen der Bipolarplatte 108 und der anodenseitig benachbarten Randverstärkungsanordnung 118 angeordnetes Element ausgebildet ist.

Zwischen den Abstützelementen 192 oder innerhalb der Abstützelemente 192 sind Durchtrittskanäle für den Durchtritt des kathodischen Fluids durch die Anordnung aus den Abstützelementen 192 vorgesehen.

Wie ebenfalls aus Fig. 3 zu ersehen ist, ist die Bipolarplatte 108 ferner an ihrer Kathodenseite an der Stelle, welche dem Bereich gegenüberliegt, in dem das anodenseitige Kanal-Abdichtelement 178 und das anodenseitige Strömungsfeld-Dichtelement 150 benachbart zueinander verlaufen, an ihrer Kathodenseite ebenfalls mit Abstützelementen 194 versehen, mit welchen sich die Bipolarplatte 108 an der kathodenseitigen Gasdiffusionslage 112 und an der Randverstärkungsanordnung 118, an welcher die kathodenseitige Gasdiffusionslage 112 anliegt, abstützt.

Diese Abstützelemente 194 können als Erhebungen an die kathodenseitige Bipolarplattenlage 134 angeformt sein oder als separat von der Bipolarplatte 108 ausgebildete und bei der Montage der elektrochemischen Vorrichtung 100 zwischen der Bipolarplatte 108 und der kathodenseitigen Gasdiffusionslage 112 angeordnete Elemente ausgebildet sein.

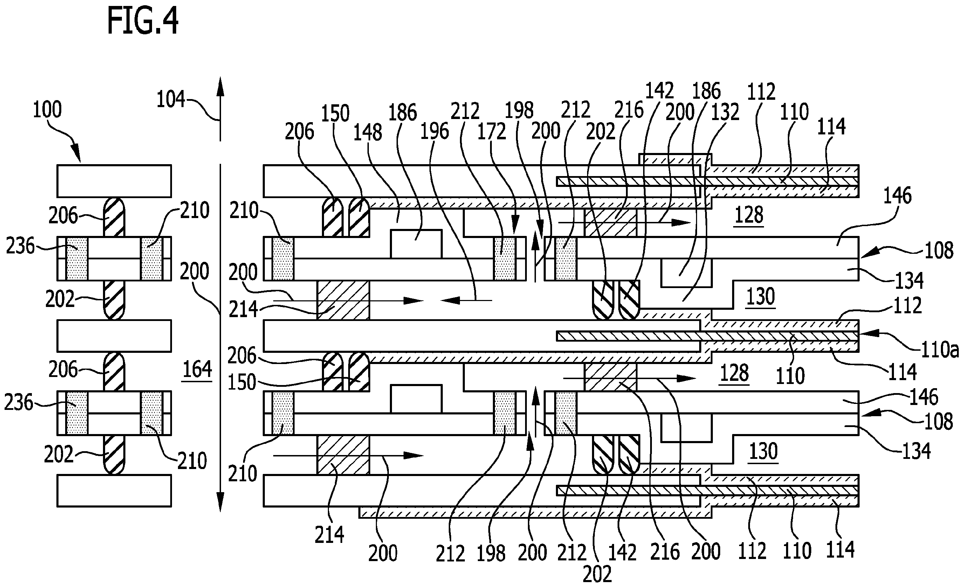

Wie aus Fig. 4 zu ersehen ist, ist die elektrochemische Vorrichtung 100 im Bereich der Zufuhr des anodischen Fluids aus dem Zuführkanal 164 für anodisches Fluid zu den anodenseitigen Fluidräumen 128 der elektrochemischen Einheiten 106 entsprechend aufgebaut wie in dem in Fig. 3 dargestellten Bereich der Abfuhr des kathodischen Fluids aus den kathodenseitigen Fluidräumen 130 in den Abführkanal 160 für kathodisches Fluid, wobei jedoch die Zufuhr des anodischen Fluids in Ebenen der elektrochemischen Vorrichtung 100 erfolgt, welche gegenüber den Ebenen, in welchen die Abfuhr des kathodischen Fluids erfolgt, in der Stapelrichtung 104 versetzt sind.

Ferner ist im Bereich der Zufuhr des anodischen Fluids der anodenseitige Randsteg 148 mit dem anodenseitigen Strömungsfeld-Dichtelement 150 gegenüber dem kathodenseitigen Randsteg 132 mit dem kathodenseitigen Strömungsfeld-Dichtelement 142 in einer senkrecht zur Stapelrichtung 104 und entgegengesetzt zur Versatzrichtung 170 gerichteten Versatzrichtung 196, also von der Mitte des anodenseitigen Strömungsfeldes 126 weg zum äußeren Rand der Bipolarplatte 108 hin, versetzt.

Im Zwischenbereich 172 zwischen dem anodenseitigen Randsteg 148 und dem kathodenseitigen Randsteg 132 ist in diesem Bereich eine Durchgangsöffnung 198 für anodisches Fluid vorgesehen, welche die Bipolarplatte 108 durchsetzt.

Das anodische Fluid strömt im Betrieb der elektrochemischen Vorrichtung 100 aus dem Zuführkanal 164 für anodisches Fluid unter dem anodenseitigen Randsteg 148 hindurch und durch die Durchgangsöffnung 198 für anodisches Fluid nach oben in den jeweiligen anodischen Fluidraum 128 ein.

Die Strömungsrichtung des anodischen Fluids durch den Zuführkanal 164 für anodisches Fluid und durch die Durchgangsöffnung 198 für anodisches Fluid 198 hindurch in die anodischen Fluidräume 128 hinein ist in Fig. 4 durch die Pfeile 200 dargestellt.

Auf der Kathodenseite der Bipolarplatte 108 ist ein kathodenseitiges Kanal-Abdichtelement 202 angeordnet, welches sich längs einer Abdichtlinie 204 um die Durchtrittsöffnung 162 für anodisches Fluid und um die Durchgangsöffnung 198 für anodisches Fluid herum erstreckt und fluiddicht abdichtend an einer benachbarten Randverstärkungsanordnung 118 anliegt.

Auf der Anodenseite der Bipolarplatte 108 ist ein anodenseitiges Kanal-Abdichtelement 206 angeordnet, welches sich um die Durchtrittsöffnung 162 für anodisches Fluid herum erstreckt und fluiddicht abdichtend an einer benachbarten Randverstärkungsanordnung 118 anliegt.

Die anodenseitige Bipolarplattenlage 146 und die kathodenseitige Bipolarplattenlage 134 sind miteinander gefügt mittels einer Fügelinie 210, welche sich um die Durchtrittsöffnung 162 für anodisches Fluid herum erstreckt, und mittels einer Fügelinie 212, welche sich um die Durchgangsöffnung 198 für anodisches Fluid herum erstreckt.

Jede Bipolarplatte 108 ist auf ihrer Kathodenseite an der Stelle, welche dem Bereich gegenüberliegt, in dem das anodenseitige Kanal-Abdichtelement 206 benachbart zu dem anodenseitigen Strömungsfeld-Dichtelement 150 verläuft, mit einem oder mehreren Abstützelementen 214 versehen.

Ferner ist jede Bipolarplatte 108 auf ihrer Anodenseite an der Stelle, welche dem Bereich gegenüberliegt, in dem das kathodenseitige Kanal-Abdichtelement 202 benachbart zu dem kathodenseitigen Strömungsfeld-Dichtelement 142 verläuft, mit einem oder mehreren Abstützelementen 216 versehen.

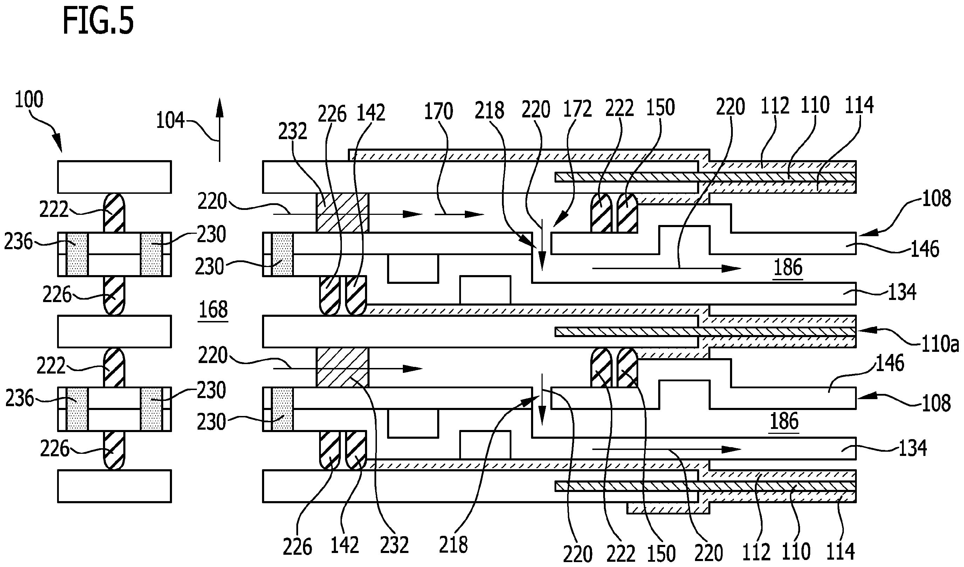

Wie aus Fig. 5 zu ersehen ist, ist die elektrochemische Vorrichtung 100 im Bereich der Zufuhr von Kühlmittel zu den Innenräumen 186 der Bipolarplatten 108 entsprechend ausgebildet wie im in Fig. 3 dargestellten Bereich der Abfuhr von kathodischem Fluid aus den kathodenseitigen Fluidräumen 130 der elektrochemischen Einheiten 106.

Insbesondere erfolgt bei der in den Fig. 1 bis 5 dargestellten elektrochemischen Vorrichtung 100 die Zufuhr von Kühlmittel in die Innenräume 186 der Bipolarplatten 108 in derselben Ebene wie die Abfuhr von kathodischem Fluid aus den kathodenseitigen Fluidräumen 130.

Ferner sind im Bereich der Zufuhr von Kühlmittel zu den Innenräumen 186 die anodenseitigen Randstege 148 mit den anodenseitigen Strömungsfeld-Dichtelementen 150 gegenüber den kathodenseitigen Randstegen 132 mit den kathodenseitigen Strömungsfeld-Dichtelementen 142 in der Versatzrichtung 170, das heißt vom äußeren Rand der Bipolarplatten 108 weg in Richtung auf die Mitte des anodenseitigen Strömungsfelds 126 hin, versetzt.

Im Zwischenbereich 172 ist an jeder Bipolarplatte 108 eine Durchgangsöffnung 218 für Kühlmittel an der anodenseitigen Bipolarplattenlage 146 vorgesehen, durch welche Kühlmittel aus dem Zuführkanal 168 für Kühlmittel in den Innenraum 186 der Bipolarplatte 108 gelangen kann.

Diese Durchgangsöffnung 218 erstreckt sich also nicht durch die ganze mehrlagige Bipolarplatte 108 hindurch.

Im Betrieb der elektrochemischen Vorrichtung 100 strömt das Kühlmittel aus dem Zuführkanal 168 für Kühlmittel über den kathodenseitigen Randsteg 132 hinweg und durch die Durchgangsöffnung 218 für Kühlmittel in den Innenraum 186 der Bipolarplatte 108 hinein.

Die Strömungsrichtung des Kühlmittels ist in Fig. 5 durch die Pfeile 220 angegeben.

Ein anodenseitiges Kanal-Abdichtelement 222 erstreckt sich längs einer Abdichtlinie 224 um die Durchtrittsöffnung 166 für Kühlmittel und um die Durchgangsöffnung 218 für Kühlmittel herum und liegt fluiddicht abdichtend an einer benachbarten Randverstärkungsanordnung 118 an.

Auf der Kathodenseite der Bipolarplatte 108 erstreckt sich ein kathodenseitiges Kanal-Abdichtelement 226 längs einer Abdichtlinie 228 um die Durchtrittsöffnung 166 für Kühlmittel herum und liegt fluiddicht abdichtend an einer benachbarten Randverstärkungsanordnung 118 an.

Die anodenseitige Bipolarplattenlage 146 und die kathodenseitige Bipolarplattenlage 134 sind längs einer Fügelinie 230, die sich um die Durchtrittsöffnung 166 für Kühlmittel herum erstreckt, fluiddicht miteinander gefügt.

Auf der Anodenseite der Bipolarplatte 108 sind an der Stelle, welche dem Bereich gegenüberliegt, in dem das kathodenseitige Kanal-Abdichtelement 226 benachbart zu dem kathodenseitigen Strömungsfeld-Dichtelement 142 verläuft, ein oder mehrere Abstützelemente 232 angeordnet.

Nahe des äußeren Randes 234 der Bipolarplatte 108 sind die anodenseitige Bipolarplattenlage 146 und die kathodenseitige Bipolarplattenlage 134 jeder Bipolarplatte 108 längs einer Fügelinie 236 fluiddicht miteinander gefügt.

Die Fügelinie 236 ist vorzugsweise durch Verschweißung, insbesondere durch Widerstandsschweißung oder durch Laserschweißung, erzeugt.

Grundsätzlich kann auch vorgesehen sein, dass die Zufuhr von Kühlmittel in die Innenräume 186 der Bipolarplatten 108 in derselben Ebene der elektrochemischen Vorrichtung 100 erfolgt wie die Zufuhr von anodischem Fluid zu den anodenseitigen Fluidräumen 128.

Ferner können in Bezug auf jedes der der elektrochemischen Vorrichtung 100 zuzuführende Medium (kathodisches Fluid, anodisches Fluid und Kühlmittel) die Bereiche von Zufuhr und Abfuhr des betreffenden fluiden Mediums miteinander vertauscht werden, so dass sich die durch die Pfeile 176, 200 und 220 angegebenen Strömungsrichtungen dieser Medien durch die elektrochemische Vorrichtung 100 umkehren.

Dabei kann jede Strömungsrichtung eines dieser fluiden Medien mit beliebigen Strömungsrichtungen der anderen Medien kombiniert sein.

Die anodenseitigen Kanal-Abdichtelemente 178, 206 und 222 sind in den Fig. 3 bis 5 jeweils getrennt von dem benachbarten anodenseitigen Strömungsfeld-Dichtelement 150 dargestellt; alternativ hierzu kann aber auch vorgesehen sein, dass die anodenseitigen Kanal-Abdichtelemente 178, 206 und/oder 222 jeweils einstückig mit dem jeweils benachbarten Abschnitt des anodenseitigen Strömungsfeld-Dichtelements 150 ausgebildet sind.

Ferner sind in den Fig. 3 bis 5 auch die kathodenseitigen Kanal-Abdichtelemente 182, 202 und 226 jeweils getrennt von dem benachbarten kathodenseitigen Strömungsfeld-Dichtelement 142 dargestellt. Grundsätzlich ist es aber auch möglich, das kathodenseitige Kanal-Abdichtelement 182, 202 und/oder 226 jeweils einstückig mit dem benachbarten Abschnitt des kathodenseitigen Strömungsfeld-Dichtelements 142 auszubilden.

Ferner sind in den Fig. 1 und 2 die anodenseitigen Kanal-Abdichtelemente 178, 206 und 222 separat voneinander dargestellt. Grundsätzlich ist es aber auch möglich, zwei oder mehr der anodenseitigen Kanal-Abdichtelemente 178, 206 und 222 einstückig miteinander auszubilden.

Außerdem sind in Fig. 2 die kathodenseitigen Kanal-Abdichtelemente 182, 202 und 226 getrennt voneinander dargestellt. Grundsätzlich ist es aber auch möglich, zwei oder mehr der kathodenseitigen Kanal-Abdichtelemente 182, 202 und 226 einstückig miteinander auszubilden.

Die Dichtelemente 142, 150, 178, 182, 202, 206, 222 und 226 sind vorzugsweise an der Bipolarplatte 108 so ausgebildet, dass sie sich nicht mit den Fügelinien 188, 190, 210, 212, 230 und 236 überlappen, an denen die anodenseitige Bipolarplattenlage 146 und die kathodenseitige Bipolarplattenlage 134 miteinander gefügt sind. Insbesondere ist vorzugsweise vorgesehen, dass die Dichtelemente die Fügelinien - in der Stapelrichtung 104 gesehen - nicht kreuzen und auch nicht parallel zu denselben in der Stapelrichtung 104 über oder unter den Fügelinien verlaufen.

Hierdurch ist es möglich, die anodenseitige Bipolarplattenlage 146 und die kathodenseitige Bipolarplattenlage 134 miteinander zu fügen, nachdem die genannten, vorzugsweise elastomeren, Dichtelemente an den Bipolarplattenlagen 146 beziehungsweise 134 erzeugt worden sind.

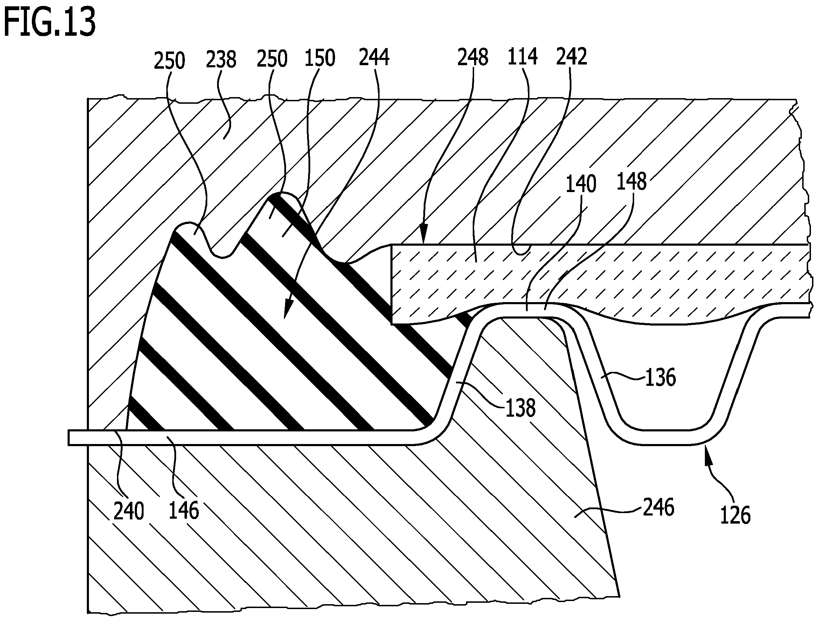

Die Fig. 13 bis 16 zeigen verschiedene Möglichkeiten, wie bei der Herstellung der Bipolarplatten 108 die Gasdiffusionslagen 112, 114 gemeinsam mit dem jeweiligen Strömungsfeld-Dichtelement 142, 150 an den jeweils zugeordneten Randsteg 132, 148 angebunden werden können.

Fig. 13 zeigt, wie ein Strömungsfeld-Dichtelement, beispielsweise das anodenseitige Strömungsfeld-Dichtelement 150, durch einen Spritzgießvorgang erzeugt und gleichzeitig mit der jeweils zugeordneten Bipolarplattenlage, beispielsweise mit der anodenseitigen Bipolarplattenlage 146, und mit der jeweils zugeordneten Gasdiffusionslage, beispielsweise mit der anodenseitigen Gasdiffusionslage 114, stoffschlüssig verbunden werden kann.

Die Bipolarplattenlage 146 wird vorzugsweise durch einen Umformvorgang, insbesondere durch einen Präge- oder Tiefziehvorgang, aus einem metallischen Ausgangsmaterial, insbesondere aus einem metallischen Blechmaterial, hergestellt, wobei der Randsteg 148 entsteht.

Die Gasdiffusionslage 114 wird so auf die Bipolarplattenlage 146 aufgelegt, dass sie den Scheitelbereich 140 des Randsteges 148 im Wesentlichen vollständig überdeckt und sich darüber hinaus auf die dem Strömungsfeld 126 abgewandte Seite des Randsteges 148 erstreckt.

Ein erstes Spritzgieß-Werkzeug 238 wird mit Abdrückkanten 240 und 242 so auf die Bipolarplattenlage 146 beziehungsweise auf die Gasdiffusionslage 114 aufgesetzt, dass die mit dem, vorzugsweise elastomeren, Spritzgießmaterial auszufüllende Kavität 244 gebildet wird.

Ein zweites Spritzgieß-Werkzeug 246 wird auf der der Kavität 244 abgewandten Seite der Bipolarplattenlage 146 an dieselbe angelegt, um als Gegenhalter für die Verpressung der Bipolarplattenlage 146 und der Gasdiffusionslage 114 im Bereich der Abdrückkanten 240 und 242 des ersten Spritzgieß-Werkzeugs 238 zu dienen.

Beim anschließenden Befüllen der Kavität 244 mit dem auszuhärtenden Elastomermaterial, aus welchem das Strömungsfeld-Dichtelement 150 gebildet wird, dringt das Elastomermaterial auch in den der Kavität 244 zugewandten Randbereich 248 der porösen Gasdiffusionslage 114 ein, so dass die Gasdiffusionslage 114 innig und stoffschlüssig mit dem Strömungsfeld-Dichtelement 150 verbunden wird.

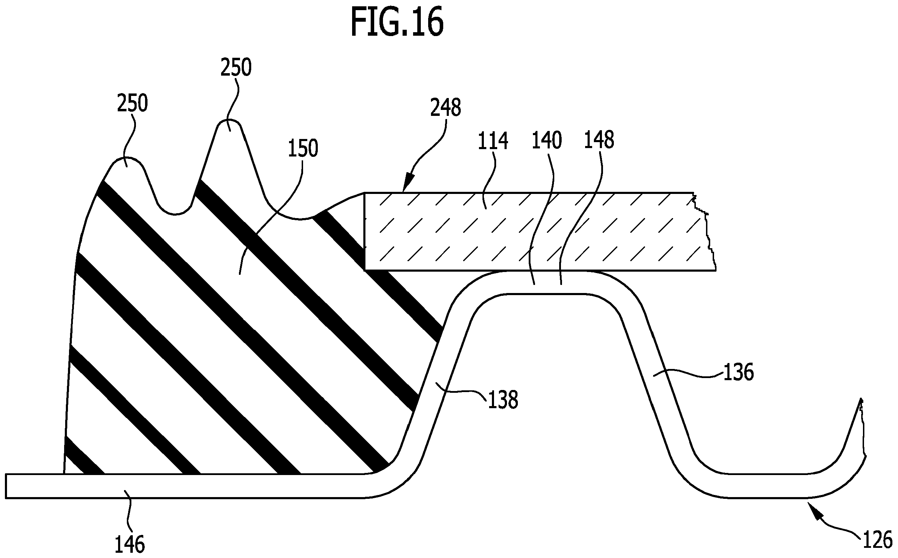

Nach dem Aushärten des Elastomermaterials und dem Entfernen der Spritzgieß-Werkzeuge 238 und 246 erhält die Anordnung aus dem Strömungsfeld-Dichtelement 150, der Bipolarplattenlage 146 und der Gasdiffusionslage 114 die in Fig. 16 gezeigte Gestalt, wobei das Strömungsfeld-Dichtelement 150 auch mit der Bipolarplattenlage 146, insbesondere mit der äußeren Flanke 138 des Randsteges 148, stoffschlüssig verbunden ist.

Das Strömungsfeld-Dichtelement 150 kann eine oder mehrere Dichtlippen 250 aufweisen, mit denen das Strömungsfeld-Dichtelement 150 im montierten Zustand der elektrochemischen Vorrichtung 100 an der jeweils benachbarten Randverstärkungsanordnung 118 fluiddicht abdichtend anliegt.

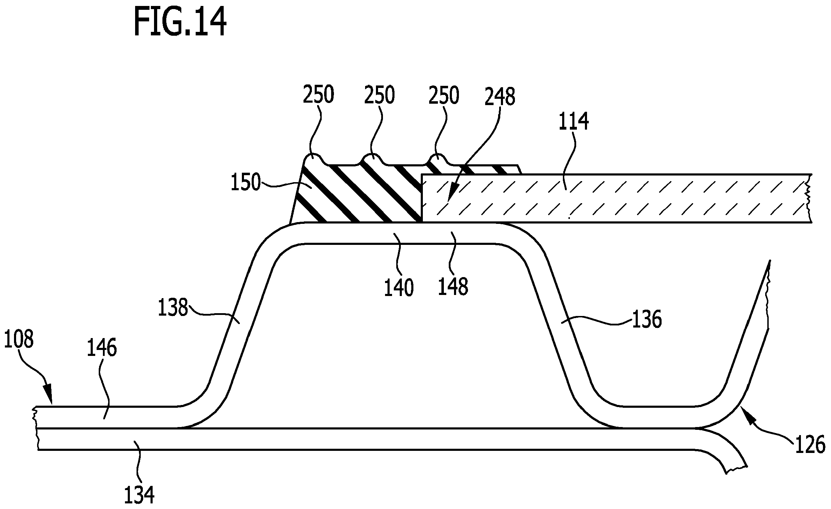

Eine alternative Anbindung des Strömungsfeld-Dichtelements 150 an die Bipolarplattenlage 146 und an die Gasdiffusionslage 114 ist in Fig. 14 dargestellt.

Bei dieser alternativen Ausführungsform erstreckt sich die Gasdiffusionslage 114 nicht über den gesamten Scheitelbereich 140 des Randsteges 148 hinweg bis auf die dem Strömungsfeld 126 abgewandte Seite des Randsteges 148; vielmehr endet die an dem Scheitelbereich 140 anliegende Gasdiffusionslage 114 innerhalb des Scheitelbereichs 140 des Randstegs 148.

Das Strömungsfeld-Dichtelement 150 erstreckt sich bei dieser Ausführungsform über einen von der Gasdiffusionslage 114 nicht überdeckten Abschnitt des Scheitelbereichs 140 des Randsteges 148 und über den Randbereich 248 der Gasdiffusionslage 114 und dringt vorzugsweise auch in den Randbereich 248 der Gasdiffusionslage 114 ein, um eine besonders innige, stoffschlüssige Verbindung zwischen dem Strömungsfeld-Dichtelement 150 und der Gasdiffusionslage 114 herzustellen.

Vorzugsweise ist bei dieser Ausführungsform vorgesehen, dass sich das Strömungsfeld-Dichtelement 150 nicht bis auf die äußere Flanke 138 des Randstegs 148 erstreckt.

Auch bei dieser Ausführungsform kann das Strömungsfeld-Dichtelement 150 eine oder mehrere Dichtlippen 250 aufweisen.

Auch das Strömungsfeld-Dichtelement 150 gemäß Fig. 14 kann beispielsweise durch ein Spritzgieß-Verfahren an der Bipolarplattenlage 146 und an der Gasdiffusionslage 114 erzeugt werden.

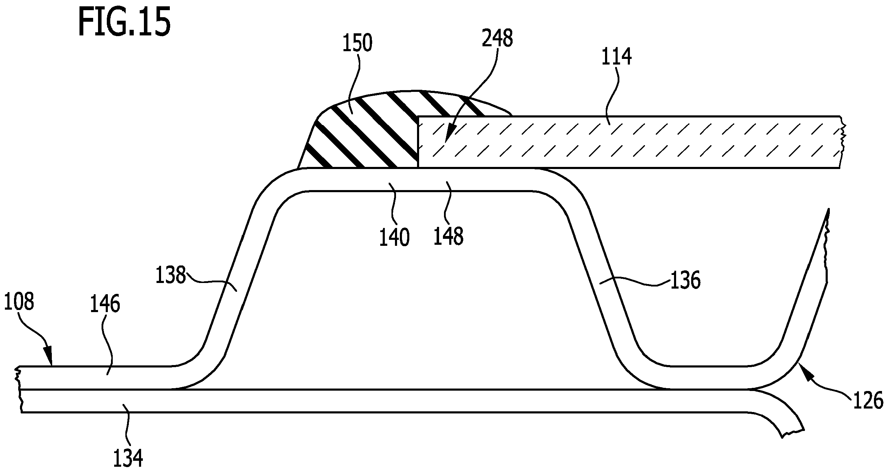

Eine in Fig. 15 dargestellte alternative Möglichkeit zur Anbindung des Strömungsfeld-Dichtelements 150 an die Bipolarplattenlage 146 und an die Gasdiffusionslage 114 unterscheidet sich von der in Fig. 14 dargestellten Ausführungsform dadurch, dass das Strömungsfeld-Dichtelement 150 im Wesentlichen unprofiliert ist und insbesondere keine ausgeformten Dichtlippen 250 aufweist.

Ein solches Strömungsfeld-Dichtelement 150 kann beispielsweise durch ein Musterdruckverfahren, insbesondere ein Siebdruckverfahren, oder durch Auftragen einer Raupe aus auszuhärtendem Elastomermaterial aus einem Applikator auf den Randsteg 148 der Bipolarplattenlage 146 und auf den Randbereich 248 der Gasdiffusionslage 114 (sogenanntes CIP("Cured-in-place")-Verfahren) erzeugt werden.

Bei der in den Fig. 1 bis 5 dargestellten elektrochemischen Vorrichtung 100 liegen die anodenseitigen Strömungsfeld-Dichtelemente 150 und die kathodenseitigen Strömungsfeld-Dichtelemente 142 jeweils fluiddicht abdichtend an einer benachbarten Randverstärkungsanordnung 118 an.

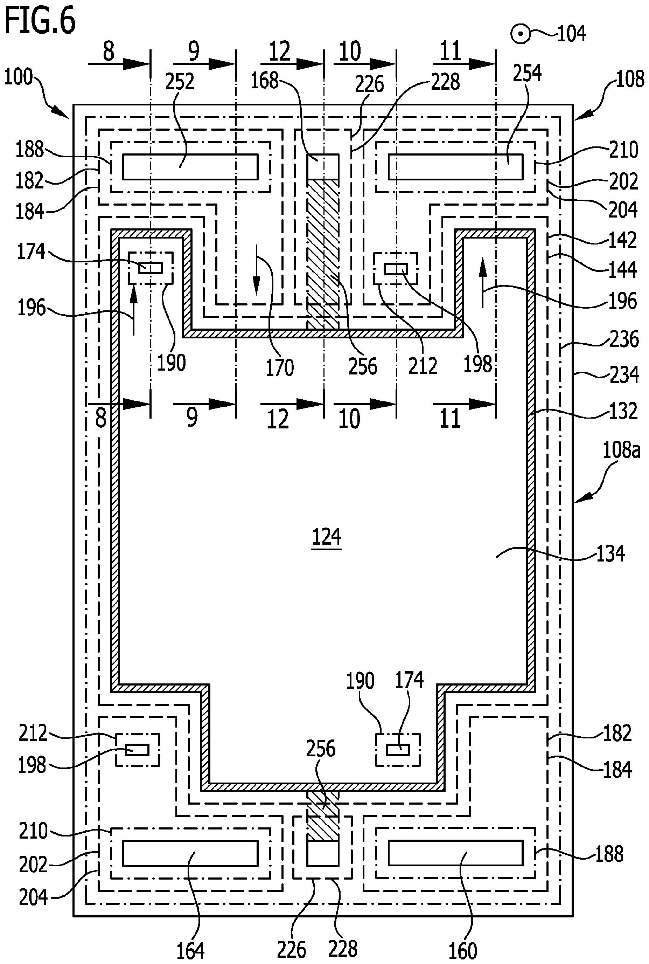

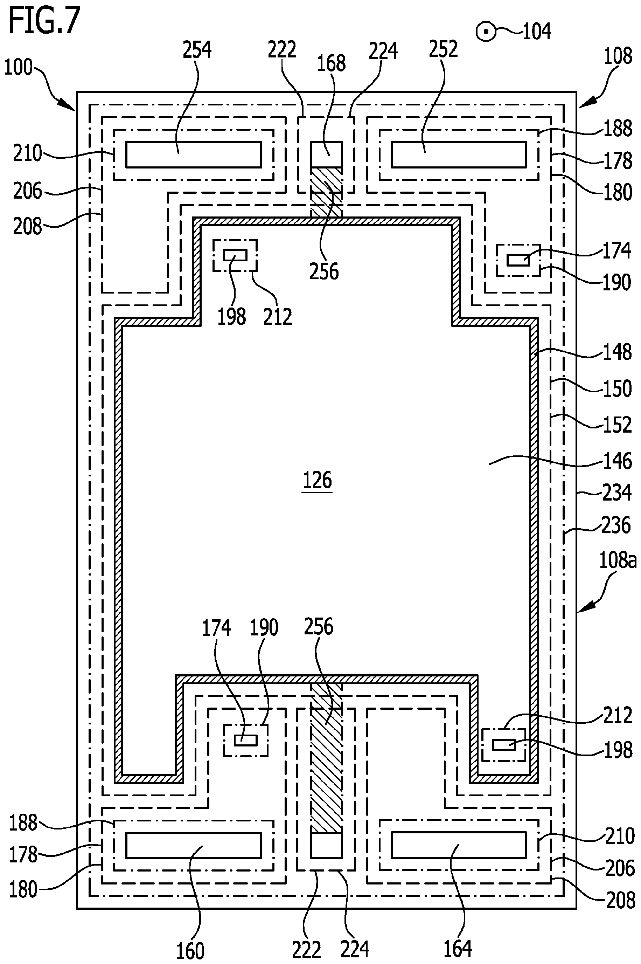

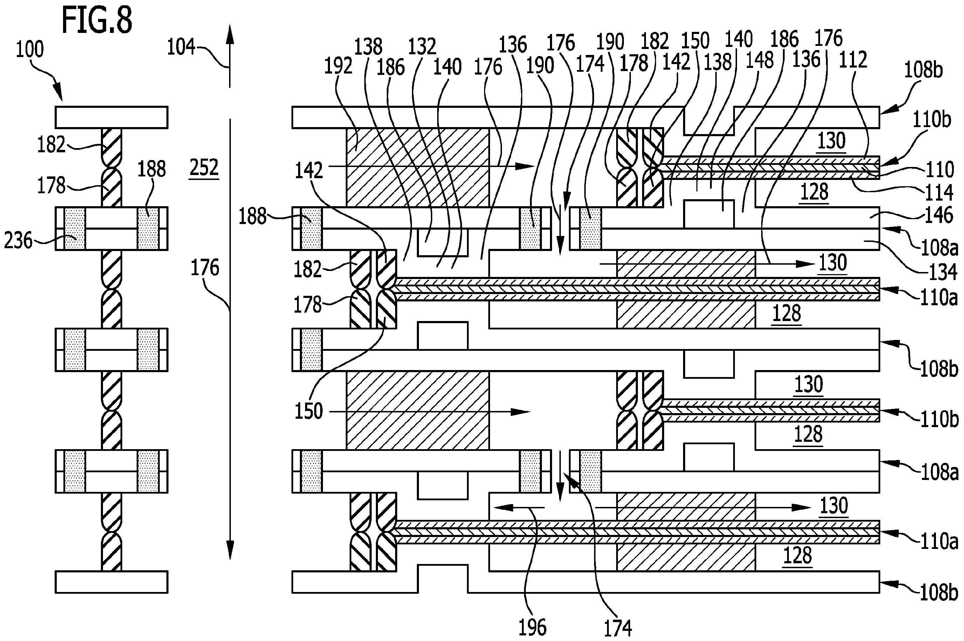

Die in den Fig. 6 bis 12 dargestellte erfindungsgemäße Ausführungsform einer solchen elektrochemischen Vorrichtung 100 unterscheidet sich von der in den Fig. 1 bis 5 dargestellten ersten Vorrichtung dadurch, dass die anodenseitigen Strömungsfeld-Dichtelemente 150 jeweils fluiddicht abdichtend an einem kathodenseitigen Strömungsfeld-Dichtelement 142 einer in der Stapelrichtung 104 darüber liegenden Bipolarplatte 108 fluiddicht abdichtend anliegen (siehe die Fig. 8 bis 12).

Um dies zu ermöglichen, sind die einander zugewandten Randstege 132, 148 zweier in der Stapelrichtung 104 aufeinander folgender Bipolarplatten 108a und 108b, welche jeweils auf den einander gegenüberliegenden Seiten derselben Membran-Elektroden-Anordnung 110 angeordnet sind, einander - in der Stapelrichtung 104 gesehen - deckungsgleich angeordnet, während die Randstege 132 und 148 derselben Bipolarplatte 108a beziehungsweise 108b, ebenso wie bei der in den Fig. 1 bis 5 dargestellten ersten Vorrichtung, weiterhin abschnittsweise in einer senkrecht zur Stapelrichtung 104 ausgerichteten Versatzrichtung 170 oder 196 gegeneinander versetzt angeordnet sind.

Dies wird dadurch erreicht, dass die in der Stapelrichtung unmittelbar aufeinander folgenden Bipolarplatten 108a und 108b zwar im Wesentlichen identisch miteinander ausgebildet sind, jedoch bei der Montage der elektrochemischen Vorrichtung 100 jeweils um einen Winkel von 180° um eine zur Stapelrichtung 104 parallele Drehachse verdreht in den Stapel eingebaut werden.

Wie aus den Fig. 8 bis 11 zu ersehen ist, sind dadurch im Bereich der Zufuhr eines Fluids zu den jeweiligen Fluidräumen 128, 130 der elektrochemischen Einheiten 106 die Randstege 132, 148 in einer ersten Ebene der elektrochemischen Vorrichtung 100 zum Mittelpunkt des jeweils zugeordneten Strömungsfeldes 124, 126 hin und in einer in der Stapelrichtung 104 angrenzenden zweiten Ebene der elektrochemischen Vorrichtung 100 vom Mittelpunkt des jeweils zugeordneten Strömungsfelds 124, 126 weg nach außen versetzt.

Dabei findet jeweils in der Ebene, in welcher die Randstege 132, 148 zur Mitte des Strömungsfelds 124, 126 hin versetzt sind, eine Fluidzufuhr aus dem jeweiligen Fluidkanal bis zu der jeweils zugeordneten Durchgangsöffnung 174, 198 für das betreffende Fluid in der Bipolarplatte 108a, 108b statt, wobei das betreffende Fluid über die Randstege 132, 148 in der jeweils benachbarten Ebene hinweg geführt wird.

An der jeweiligen Durchgangsöffnung 174, 198 wechselt dann das Fluid durch die Bipolarplatte 108a, 108b in den jeweils zugeordneten Fluidraum 128, 130 der in der Stapelrichtung 104 benachbarten Ebene der elektrochemischen Vorrichtung 100.

Dies sei in den folgenden Beispielen, unter Bezugnahme auf die Schnittdarstellungen der Fig. 8 bis 11, näher erläutert:
Aus Fig. 8 ist zu ersehen, wie kathodisches Fluid aus dem Zuführkanal 252 für kathodisches Fluid in der (von oben gezählt) ersten Ebene und dritten Ebene der elektrochemischen Vorrichtung 100 zu den Durchgangsöffnungen 174 für kathodisches Fluid in den Bipolarplatten 108a und durch diese Durchgangsöffnung hindurch in die kathodenseitigen Fluidräume 130 auf der Kathodenseite eines ersten Satzes von Membran-Elektroden-Anordnungen 110a gelangt.

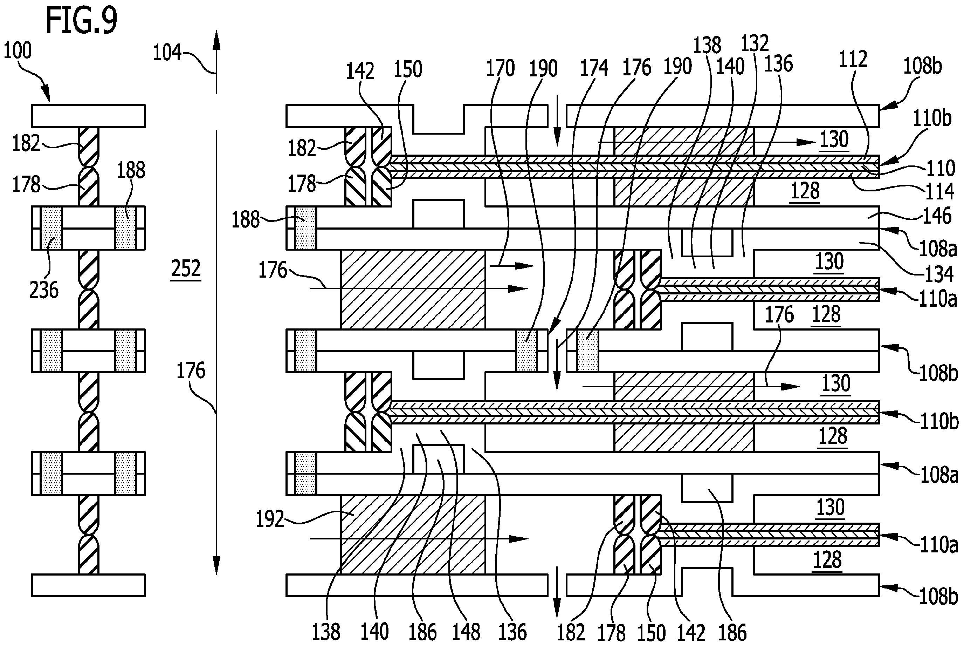

Aus Fig. 9 ist zu ersehen, wie kathodisches Fluid aus dem Zuführkanal 252 für kathodisches Fluid in der zweiten Ebene und in der vierten Ebene der elektrochemischen Vorrichtung 100 zu den Durchgangsöffnungen 174 für kathodisches Fluid in den Bipolarplatten 108b gelangt, welche gegenüber den Bipolarplatten 108a um einen Winkel von 180° um eine zur Stapelrichtung 104 parallele Drehachse verdreht angeordnet sind. Von den Durchgangsöffnungen 174 für kathodisches Fluid dieser Bipolarplatten 108b gelangt das kathodische Fluid in die kathodenseitigen Fluidräume 130 auf der Kathodenseite eines zweiten Satzes von Membran-Elektroden-Anordnungen 110b.

Wie aus Fig. 6 zu ersehen ist, wechselt der kathodenseitige Randsteg 132 zwischen den Schnittebenen der Fig. 8 und 9 von der nach außen versetzten Position (in Fig. 8) in die nach innen versetzte Position (in Fig. 9). Entsprechend wechselt in diesem Bereich der Bipolarplatte 108 der anodenseitige Randsteg 148 von der nach innen versetzten Position in die nach außen versetzte Position.

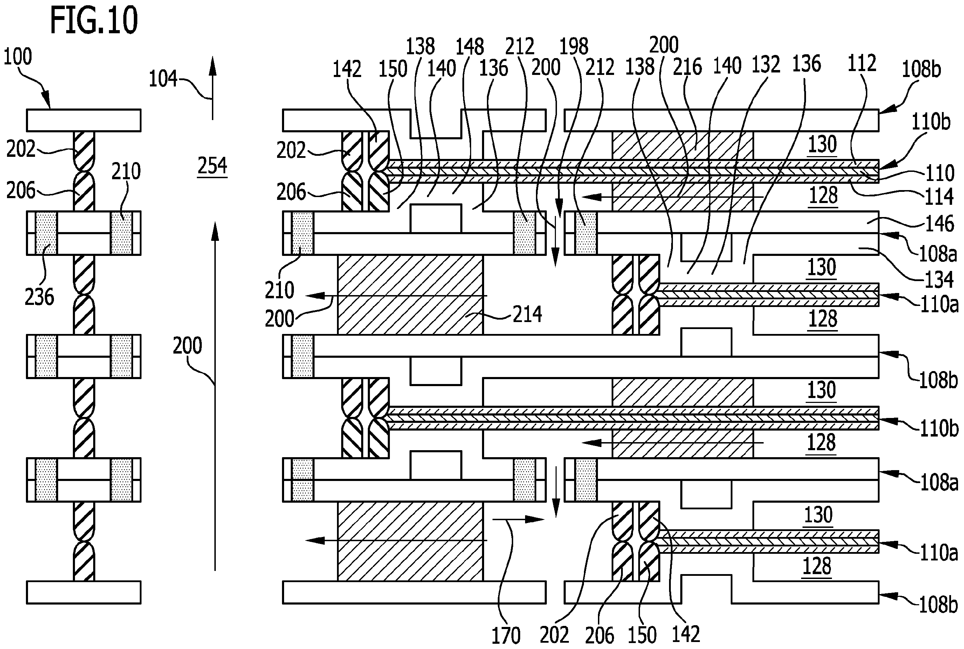

Wie aus Fig. 10 zu ersehen ist, wird dem Abführkanal 254 für anodisches Fluid in der zweiten Ebene und in der vierten Ebene der elektrochemischen Vorrichtung 100 anodisches Fluid von den Durchgangsöffnungen 198 für anodisches Fluid in den Bipolarplatten 108a zugeführt.

Diese Durchgangsöffnungen 198 für anodisches Fluid stehen in Fluidverbindung mit den anodenseitigen Fluidräumen 128 auf der Anodenseite des zweiten Satzes von Membran-Elektroden-Anordnungen 110b.

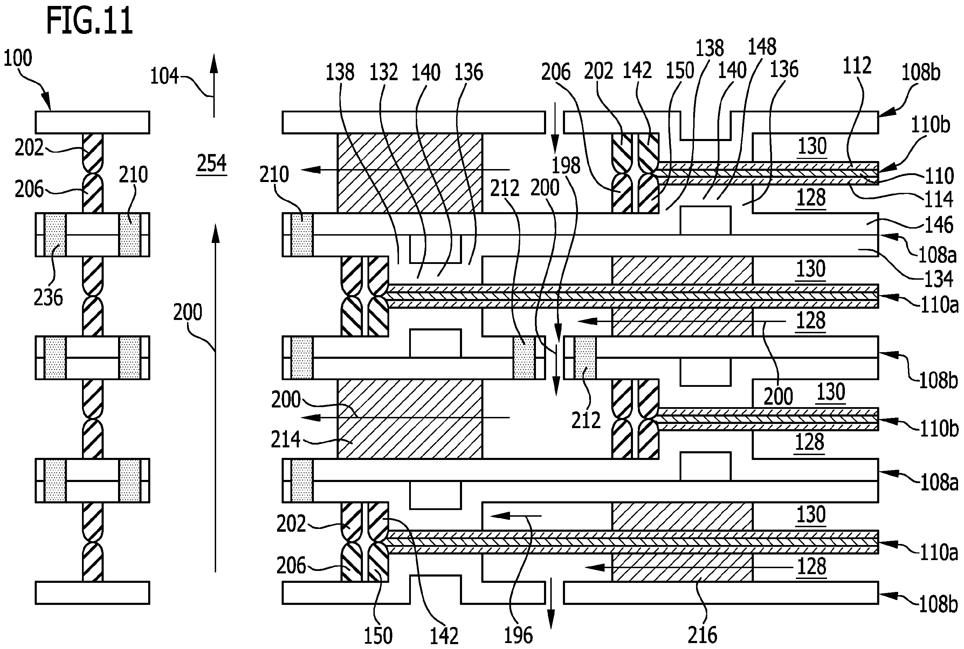

Wie aus Fig. 11 zu ersehen ist, wird dem Abführkanal 254 für anodisches Fluid in der ersten Ebene und in der dritten Ebene der elektrochemischen Vorrichtung 100 anodisches Fluid von den Durchgangsöffnungen 198 für anodisches Fluid in den Bipolarplatten 108b zugeführt.

Diese Durchgangsöffnungen 198 für anodisches Fluid stehen in Fluidverbindung mit den anodenseitigen Fluidräumen 128 auf der Anodenseite des ersten Satzes von Membran-Elektroden-Anordnungen 110a.

Wie aus Fig. 6 zu ersehen ist, wechselt der kathodenseitige Randsteg 132 der Bipolarplatte 108 zwischen den Schnittebenen der Fig. 10 und 11 von seiner inneren Position (in Fig. 10) in seine äußere Position (in Fig. 11).

Entsprechend wechselt in diesem Bereich der anodenseitige Randsteg 148 von seiner äußeren Position (in Fig. 10) in seine innere Position (in Fig. 11).

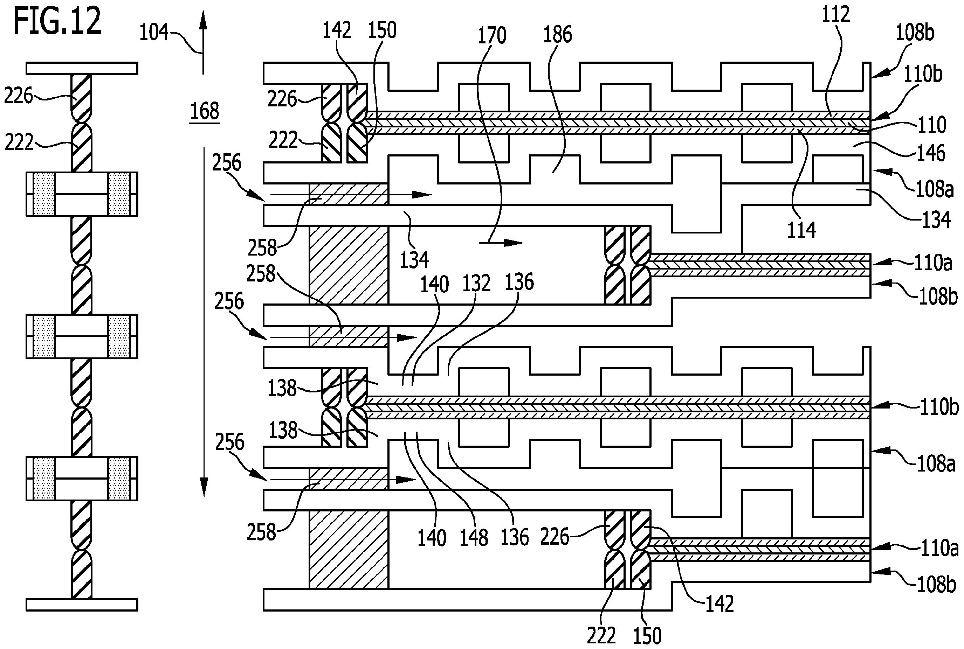

Wie aus Fig. 12 zu ersehen ist, gelangt das Kühlmittel bei dieser Ausführungsform aus dem Zuführkanal 168 für Kühlmittel durch Spalte 256 zwischen der kathodenseitigen Bipolarplattenlage 134 und der anodenseitigen Bipolarplattenlage 146 jeweils derselben Bipolarplatte 108 direkt in den Innenraum 186 der jeweilige Bipolarplatte 108, ohne einen Ebenenwechsel zu vollziehen.

In jedem der Spalte 256 können ein oder mehrere Abstützelemente 258 vorgesehen sein, welche die kathodenseitige Bipolarplattenlage 134 und die anodenseitige Bipolarplattenlage 146 auf Abstand voneinander halten, um ein Hindurchströmen des Kühlmittels zu ermöglichen.

Diese Abstützelemente 258 sind vorzugsweise in dem Bereich angeordnet, in welchem die Strömungsfeld-Dichtelemente 142, 150 und die Kanal-Abdichtelemente 222, 226 - in der Stapelrichtung 104 gesehen - den Strömungspfad des Kühlmittels kreuzen.

Im Übrigen stimmt die in den Fig. 6 bis 12 dargestellte erfindungsgemäße Ausführungsform der elektrochemischen Vorrichtung 100 hinsichtlich Aufbau, Funktion und Herstellungsweise mit der in den Fig. 1 bis 5 dargestellten ersten elektrochemischen Vorrichtung überein, auf deren vorstehende Beschreibung insoweit Bezug genommen wird.

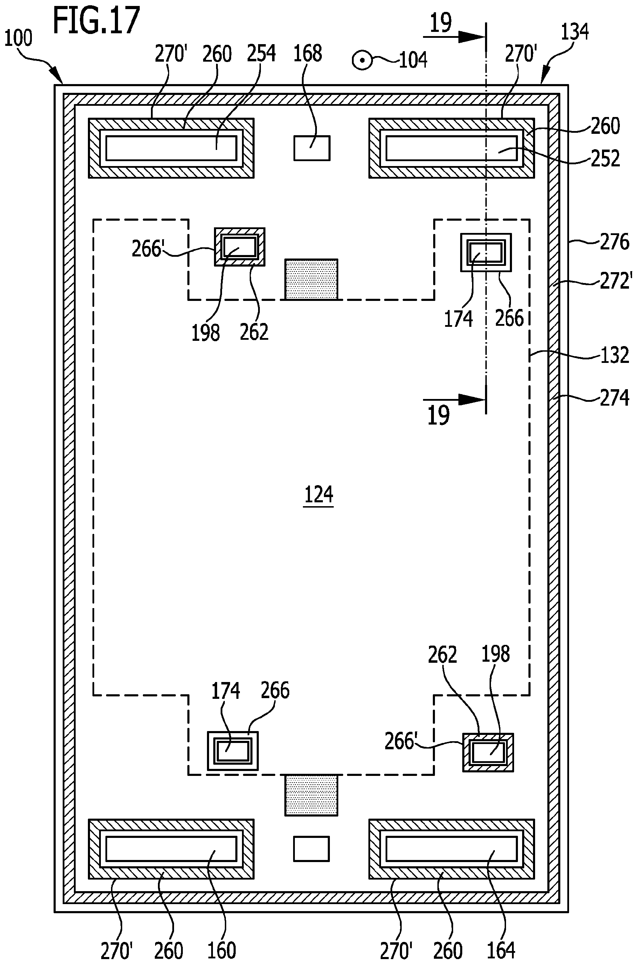

Eine in den Fig. 17 bis 19 dargestellte dritte Ausführungsform der elektrochemischen Vorrichtung unterscheidet sich von der in den Fig. 6 bis 12 dargestellten zweiten Ausführungsform dadurch, dass die kathodenseitigen Bipolarplattenlagen 134 und die jeweils zugeordneten anodenseitigen Bipolarplattenlagen 146 nicht durch Fügungen längs Fügelinien 188, 190, 210, 212, 230 und 236 miteinander gefügt sind, um den Innenraum 186, der im Betrieb der elektrochemischen Vorrichtung mit Kühlmittel gefüllt ist, gegenüber der Umgebung abzudichten; vielmehr wird bei dieser Ausführungsform die Abdichtung des Innenraums 186 der Bipolarplatte 108 durch eine Dichtungsanordnung bewirkt, welche Dichtelemente umfasst, die auf jeweils einer dem Innenraum 186 zugewandten Innenseite der kathodenseitigen Bipolarplattenlage 134 oder der anodenseitigen Bipolarplattenlage 146 angeordnet sind.

Beispielsweise können auf der in Fig. 17 dargestellten Innenseite der kathodenseitigen Bipolarplattenlage 134 Kanal-Abdichtelemente 260 vorgesehen sein, welche sich um den Zuführkanal 252 für kathodisches Fluid, um den Abführkanal 254 für anodisches Fluid, um den Abführkanal 160 für kathodisches Fluid beziehungsweise um den Zuführkanal 164 für anodisches Fluid herum erstrecken.

Ferner können an der Innenseite der kathodenseitigen Bipolarplattenlage 134 Durchgangsöffnungs-Abdichtelemente 262 vorgesehen sein, welche sich um jeweils eine der Durchgangsöffnungen 198 für anodisches Fluid herum erstrecken.

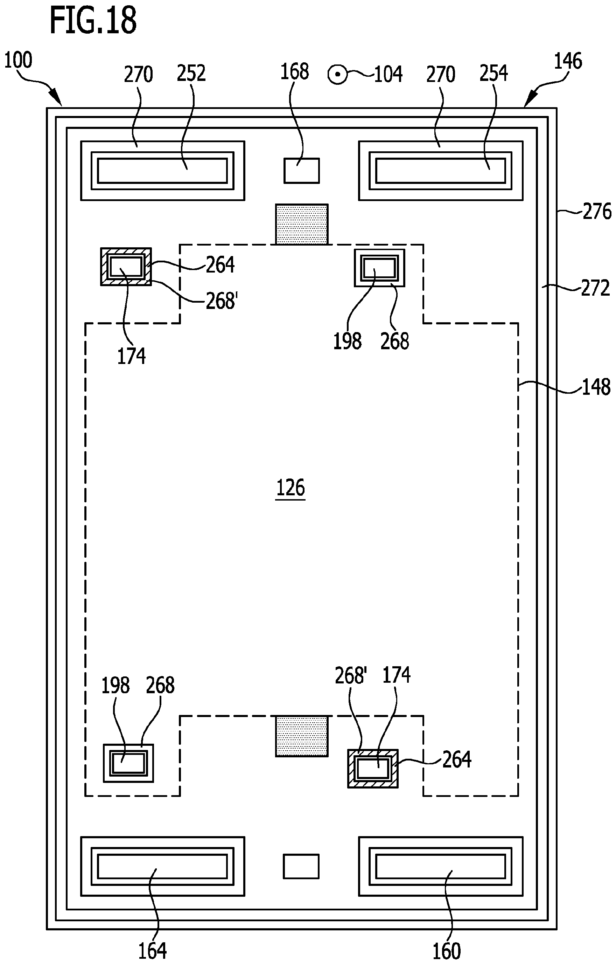

An der in Fig. 18 dargestellten Innenseite der anodenseitigen Bipolarplattenlage 146 können Durchgangsöffnungs-Abdichtelemente 264 vorgesehen sein, welche sich um jeweils eine der Durchgangsöffnungen 174 für kathodisches Fluid herum erstrecken.

Die Durchgangsöffnungs-Abdichtelemente 262 und 264 sind vorzugsweise an derjenigen Bipolarplattenlage 134 beziehungsweise 146 festgelegt, an welcher die betreffende Durchgangsöffnung 198 beziehungsweise 174 nicht von einer Gasdiffusionslage 112 oder 114 überdeckt wird.

Die Innenseite der kathodenseitigen Bipolarplattenlage 134 kann ferner mit einem längs ihres äußeren Randes 276 umlaufenden Rand-Abdichtelement 274 versehen sein.

Um genügend Volumen zur Aufnahme dieser Dichtelemente zur Verfügung zu stellen, kann vorgesehen sein, dass für jedes dieser Dichtelemente an der Innenseite der jeweils gegenüberliegenden Bipolarplattenlage 134 oder 146 jeweils eine korrespondierende Vertiefung vorgesehen ist, in welche das betreffende Dichtelement im montierten Zustand der elektrochemischen Vorrichtung 100 eingreift und in welcher das betreffende Dichtelement fluiddicht abdichtend an der jeweils gegenüberliegenden Bipolarplattenlage 134 oder 146 anliegt.

So kann insbesondere vorgesehen sein, dass die in Fig. 17 dargestellte kathodenseitige Bipolarplattenlage 134 Vertiefungen 266 zur Aufnahme der Durchgangsöffnungs-Abdichtelemente 264 an der anodenseitigen Bipolarplattenlage 146 aufweist.

Ferner kann vorgesehen sein, dass die anodenseitige Bipolarplattenlage 146 an ihrer Innenseite Vertiefungen 268 zur Aufnahme der Durchgangsöffnungs-Abdichtelemente 262 an der kathodenseitigen Bipolarplattenlage 134, Vertiefungen 270 zur Aufnahme der Kanal-Abdichtelemente 260 an der kathodenseitigen Bipolarplattenlage 134 und eine Vertiefung 272 zur Aufnahme des Rand-Abdichtelements 274 an der kathodenseitigen Bipolarplattenlage 134 aufweist.

Auch die Festlegung der Dichtelemente zum Abdichten des Innenraums 186 der Bipolarplatte 108 kann in einer Vertiefung 266', 268', 270' oder 272' an der das Dichtelement tragenden Bipolarplattenlage 134 oder 146 erfolgen.

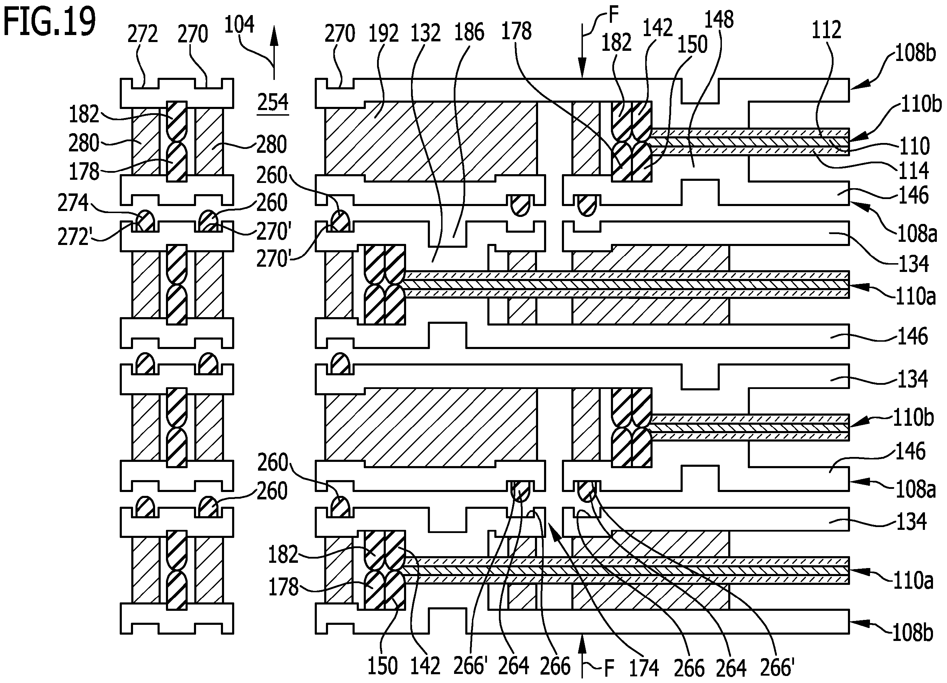

Die genannten Dichtelemente an den Innenseiten der kathodenseitigen Bipolarplattenlage 134 und der anodenseitigen Bipolarplattenlage 146 werden bei der Montage der elektrochemischen Vorrichtung mittels der (nicht dargestellten) Spannvorrichtung der elektrochemischen Vorrichtung 100 so gegeneinander verspannt, dass eine ausreichende Abdichtkraft an den Dichtelementen gewährleistet ist. Diese mittels der Spannvorrichtung erzeugte Spannkraft ist in Fig. 19 schematisch durch die Pfeile F dargestellt. Um die Spannkraft für die Verpressung der Dichtelemente in die Bipolarplattenlagen 134, 146 einleiten zu können, sind zusätzliche Abstützelemente 280 zwischen in der Stapelrichtung 104 aufeinander folgenden Bipolarplatten 108 vorgesehen.

Ferner ist zu beachten, dass in Fig. 19 die jeweils einander zugeordneten kathodenseitigen und anodenseitigen Bipolarplattenlagen 134 beziehungsweise 146 in der Stapelrichtung 104 voneinander beabstandet dargestellt sind, um zu verdeutlichen, welches der Dichtelemente bei dieser Ausführungsform an welcher Bipolarplattenlage 134 beziehungsweise 146 angeordnet ist.

Grundsätzlich können aber die Dichtelemente zur Abdichtung des Innenraums 186 der Bipolarplatte 108 nach Belieben an der kathodenseitigen Bipolarplattenlage 134 oder an der anodenseitigen Bipolarplattenlage 146 festgelegt sein.

Im Übrigen stimmt die in den Fig. 17 bis 19 dargestellte zweite erfindungsgemäße Ausführungsform der elektrochemischen Vorrichtung 100 hinsichtlich Aufbau, Funktion und Herstellungsweise mit der in den Fig. 6 bis 12 dargestellten erfindungsgemäßen Ausführungsform überein, auf deren vorstehende Beschreibung insoweit Bezug genommen wird.

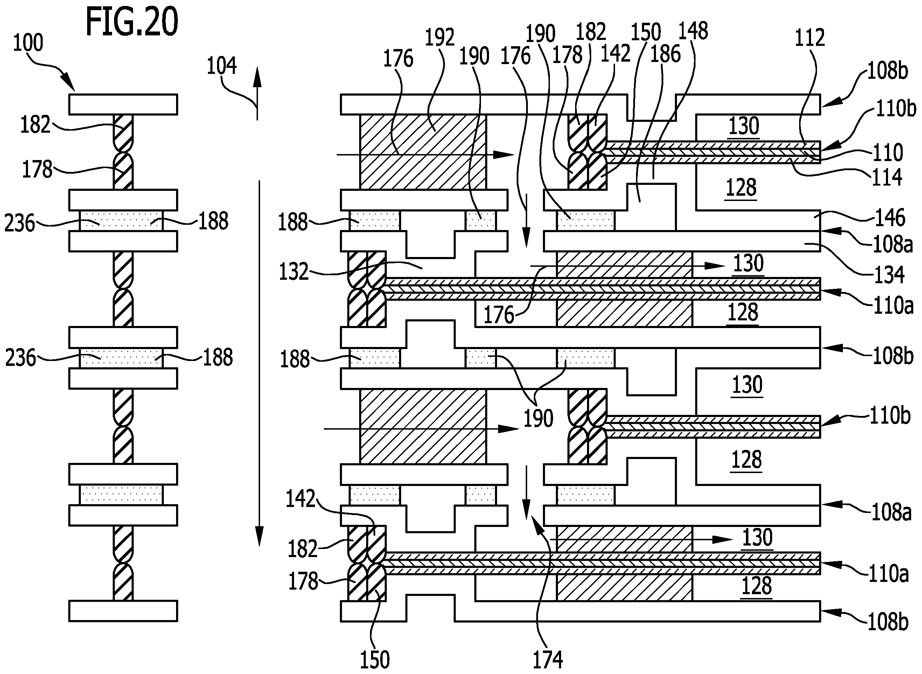

Eine in Fig. 20 dargestellte dritte erfindungsgemäße Ausführungsform der elektrochemischen Vorrichtung 100 unterscheidet sich von der in den Fig. 6 bis 12 dargestellten erfindungsgemäßen Ausführungsform dadurch, dass die einander jeweils zugeordneten kathodenseitigen Bipolarplattenlagen 134 und anodenseitigen Bipolarplattenlagen 146 längs der Fügelinien 188, 190, 210, 212, 230 und/oder 236 nicht durch Verschweißung, sondern durch Verklebung miteinander gefügt, insbesondere stoffschlüssig verbunden, sind.

Vorzugsweise werden dabei die Bipolarplattenlagen 134 und 146 nach dem Anordnen der Gasdiffusionslagen 112 beziehungsweise 114 und nach dem Erzeugen der Strömungsfeld-Dichtelemente 142 beziehungsweise 150 an den Bipolarplattenlagen 134 beziehungsweise 146 miteinander verklebt.

Anders als bei der in den Fig. 6 bis 12 dargestellten erfindungsgemäßen Ausführungsform ist dabei vorzugsweise vorgesehen, dass die an den Bipolarplattenlagen 134 und 146 erzeugten Strömungsfeld-Dichtelemente 142, 150 und/oder die an den Bipolarplattenlagen 134 und 146 erzeugten Kanal-Abdichtelemente 178, 182 mit den Fügelinien 188, 190, 210, 212, 230 und/oder 236, an welchen die Bipolarplattenlagen 134 und 146 durch Verklebung miteinander gefügt sind, überlappen, was einen kompakteren Aufbau der Bipolarplatten 108 und somit der elektrochemischen Vorrichtung 100 insgesamt im Bereich der genannten Dichtelemente ermöglicht.

Im Übrigen stimmt die in Fig. 20 dargestellte dritte erfindungsgemäße Ausführungsform der elektrochemischen Vorrichtung 100 hinsichtlich Aufbau, Funktion und Herstellungsweise mit der in den Fig. 6 bis 12 dargestellten erfindungsgemäßen Ausführungsform überein, auf deren vorstehende Beschreibung insoweit Bezug genommen wird.

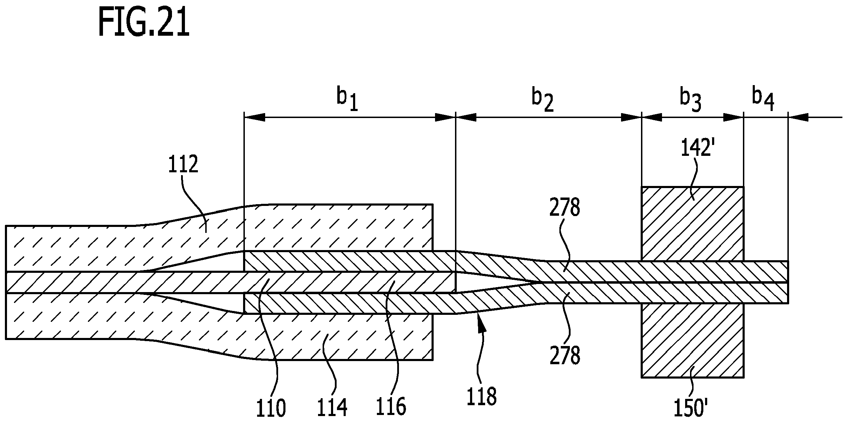

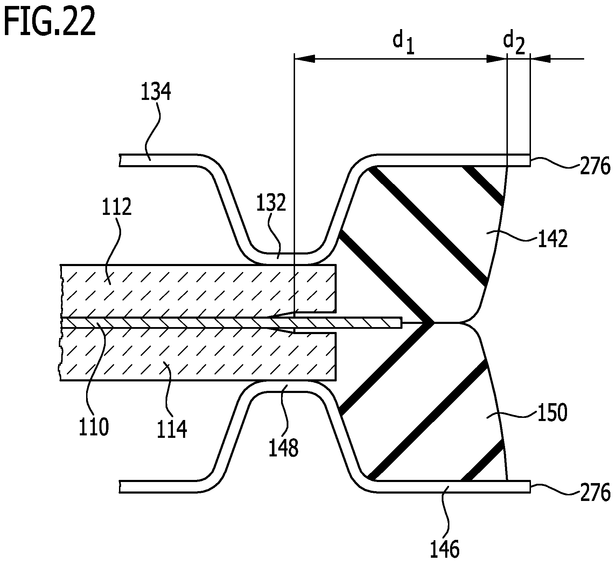

Die Fig. 21 und 22 zeigen einen Vergleich des Platzbedarfs für einen Dichtungsaufbau gemäß dem Stand der Technik (Fig. 21) und einen Dichtungsaufbau bei der ersten bis dritten erfindungsgemäßen Ausführungsform einer elektrochemischen Vorrichtung 100 (Fig. 22), wie sie in den Fig. 6 bis 12 und 17 bis 20 dargestellt sind.

Der in Fig. 21 dargestellte Dichtungsaufbau gemäß dem Stand der Technik umfasst eine Membran-Elektroden-Anordnung 110, die mit einer Randverstärkungsanordnung 118 aus zwei den äußeren Randbereich 116 der Membran-Elektroden-Anordnung 110 einschließenden Randverstärkungslagen 278 versehen ist, eine kathodenseitige Gasdiffusionslage 112, eine anodenseitige Gasdiffusionslage 114, ein kathodenseitiges Strömungsfeld-Dichtelement 142' und ein anodenseitiges Strömungsfeld-Dichtelement 150', wobei die Dichtelemente 142' und 150' wahlweise an der Randverstärkungsanordnung 118 oder an einer benachbarten (nicht dargestellten) Bipolarplatte 108 festgelegt sein können.

Dabei muss der Überlappungsbereich zwischen der Membran-Elektroden-Anordnung 110 und der Randverstärkungsanordnung 118 eine Breite b₁ von ungefähr 2 mm bis ungefähr 5 mm aufweisen. Zwischen den Dichtelementen 142' und 150' einerseits und der Membran-Elektroden-Anordnung 110 andererseits muss ein Abstand b₂ von ungefähr 3 mm bis ungefähr 6 mm eingehalten werden. Die Breite b₃ der Strömungsfeld-Dichtelemente 142' und 150' beträgt jeweils ungefähr 4 mm bis ungefähr 7 mm. Zwischen den Strömungsfeld-Dichtelementen 142', 150' einerseits und dem äußeren Rand der Randverstärkungsanordnung andererseits muss ein Abstand b₄ von ungefähr 1 mm bis ungefähr 3 mm eingehalten werden.

Die gesamte Breite B (gleich b₁ + b₂ + b₃ + b₄) des Dichtungsaufbaus beträgt somit von ungefähr 10 mm bis ungefähr 20 mm.

Der in Fig. 22 dargestellte erfindungsgemäße Dichtungsaufbau umfasst eine Membran-Elektroden-Anordnung 110, welche bei dieser Ausführungsform keine Randverstärkungsanordnung 118 aufweist, eine kathodenseitige Gasdiffusionslage 112, eine anodenseitige Gasdiffusionslage 114, eine kathodenseitige Bipolarplattenlage 134 mit einem kathodenseitigen Randsteg 132, eine anodenseitige Bipolarplattenlage 146 mit einem anodenseitigen Randsteg 148, ein kathodenseitiges Strömungsfeld-Dichtelement 142 und ein anodenseitiges Strömungsfeld-Dichtelement 150, wobei die beiden Strömungsfeld-Dichtelemente 142 und 150 bei dieser Ausführungsform unmittelbar fluiddicht abdichtend aneinander anliegen.

Bei diesem Dichtungsaufbau beträgt die Breite d₁ der Strömungsfeld-Dichtelemente 142 und 150 (einschließlich des in die jeweils zugeordnete Gasdiffusionslage 112 beziehungsweise 114 eindringenden Elastomermaterials) von ungefähr 4 mm bis ungefähr 7 mm. Zwischen den Strömungsfeld-Dichtelementen 142 und 150 einerseits und dem äußeren Rand 276 der Bipolarplattenlagen 134 und 146 andererseits muss ein Abstand d₂ von ungefähr 1 mm bis ungefähr 3 mm eingehalten werden.

Die Gesamtbreite D (gleich d₁ + d₂) des Dichtungsaufbaus gemäß Fig. 22 beträgt somit von ungefähr 5 mm bis ungefähr 10 mm und ist damit nur ungefähr halb so groß wie die Breite B des Dichtungsaufbaus gemäß dem Stand der Technik aus Fig. 21.

Die elektrochemische Vorrichtung mit dem Dichtungsaufbau gemäß Fig. 22 kann daher deutlich platzsparender ausgeführt werden als eine elektrochemische Vorrichtung 100 mit dem Dichtungsaufbau gemäß Fig. 21.

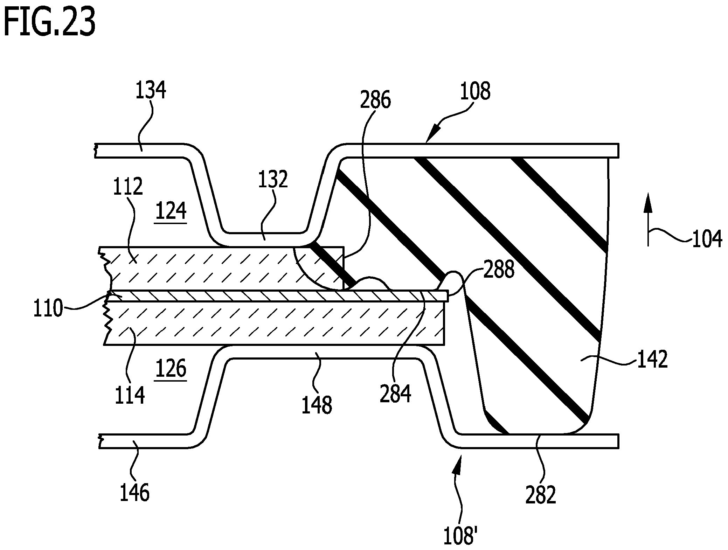

Ein in Fig. 23 dargestellter Dichtungsaufbau unterscheidet sich von dem erfindungsgemäßen Dichtungsaufbau gemäß Fig. 22 dadurch, dass ein Strömungsfeld-Dichtelement, beispielsweise das kathodenseitige Strömungsfeld-Dichtelement 142, welches in Kontakt mit dem Randsteg, beispielsweise mit dem kathodenseitigen Randsteg 132, einer ersten Bipolarplatte 108 und in Kontakt mit einer ersten Gasdiffusionslage, beispielsweise mit der kathodenseitigen Gasdiffusionslage 112, steht, sich bis zu einer der ersten Bipolarplatte 108 gegenüberliegenden zweiten Bipolarplatte 108' erstreckt.

Das zweite Strömungsfeld-Dichtelement, beispielsweise das anodenseitige Strömungsfeld-Dichtelement 150, kann bei diesem Dichtungsaufbau entfallen. Das Strömungsfeld-Dichtelement 142 ist vorzugsweise aus einem Elastomermaterial gebildet, welches insbesondere in die zugeordnete Gasdiffusionslage 112 eindringt, so dass das Strömungsfeld-Dichtelement 142 stoffschlüssig mit der Gasdiffusionslage 112 verbunden ist.

Ferner ist das Strömungsfeld-Dichtelement 142 vorzugsweise stoffschlüssig mit dem Randsteg 132 verbunden.

Wenn die erste Bipolarplatte 108 mehrlagig ausgebildet ist, so ist das Strömungsfeld-Dichtelement 142 vorzugsweise an der kathodenseitigen Bipolarplattenlage 134 der ersten Bipolarplatte 108 festgelegt.

Das Strömungsfeld-Dichtelement 142 liegt vorzugsweise mit einer Dichtlippe 282 abdichtend an der zweiten Bipolarplatte 108', insbesondere an einer anodenseitigen Bipolarplattenlage 146 der zweiten Bipolarplatte 108', und vorzugsweise mit einer weiteren Dichtlippe 284 abdichtend an der Membran-Elektroden-Anordnung 110, und zwar insbesondere an der Kathodenseite der Membran-Elektroden-Anordnung 110, an.

Hierdurch dichtet das Strömungsfeld-Dichtelement 142 sowohl ein Strömungsfeld der ersten Bipolarplatte 108, vorzugsweise das kathodenseitige Strömungsfeld 124, als auch ein Strömungsfeld der zweiten Bipolarplatte 108', vorzugsweise das anodenseitige Strömungsfeld 126, fluiddicht ab.

Um ein abdichtendes Anliegen des Strömungsfeld-Dichtelements 142 an der Membran-Elektroden-Anordnung 110 zu ermöglichen, ist hier ein äußerer Rand 286 der Gasdiffusionslage 112, an welcher das Strömungsfeld-Dichtelement 142 festgelegt ist, gegenüber einem äußeren Rand 288 der Membran-Elektroden-Anordnung 110 in einer zur Stapelrichtung 104 senkrechten Richtung nach innen versetzt.

Dabei kann das Strömungsfeld-Dichtelement 142 von dem Randsteg 148 der zweiten Bipolarplatte 108', insbesondere von dem anodenseitigen Randsteg 148, beabstandet sein.

Ein in Fig. 24 dargestellter alternativer Dichtungsaufbau unterscheidet sich von dem in Fig. 22 dargestellten Dichtungsaufbau dadurch, dass eines der Strömungsfeld-Dichtelemente, beispielsweise ein anodenseitiges Strömungsfeld-Dichtelement 150', nicht an der benachbarten Bipolarplatte 108' festgelegt ist, sondern lediglich, vorzugsweise durch Stoffschluss, mit der zugeordneten Gasdiffusionslage, beispielsweise mit der anodenseitigen Gasdiffusionslage 114, verbunden ist.

Das Strömungsfeld-Dichtelement 150' liegt bei dieser Ausführungsform mit einer oder mehreren Dichtlippen 290 abdichtend an der zweiten Bipolarplatte 108' an.

Wenn die Bipolarplatte 108' mehrlagig ausgebildet ist, so liegt das Strömungsfeld-Dichtelement 150' vorzugsweise an einer anodenseitigen Bipolarplattenlage 146 der Bipolarplatte 108' an.

Ferner liegt das Strömungsfeld-Dichtelement 150' bei dieser Ausführungsform unmittelbar fluiddicht abdichtend an dem Strömungsfeld-Dichtelement 142 an.

## Patentansprüche

1. Elektrochemische Vorrichtung, umfassend
einen Stapel aus mehreren, längs einer Stapelrichtung (104) aufeinander folgenden elektrochemischen Einheiten (106), die jeweils eine elektrochemisch aktive Membran-Elektroden-Anordnung (110), mindestens eine Gasdiffusionslage (112, 114) und eine Bipolarplatte (108) mit mindestens einem Strömungsfeld (124, 126) für mindestens ein fluides Medium umfassen,
wobei mindestens eine Bipolarplatte (108) mindestens einen Randsteg (132, 148) aufweist, der ein Strömungsfeld (124, 126) der Bipolarplatte (108) zumindest abschnittsweise berandet und in Kontakt mit einer der Bipolarplatte (108) benachbarten Gasdiffusionslage (112, 114) steht, wobei die elektrochemische Vorrichtung (100) ferner Strömungsfeld-Dichtelemente (142, 150) umfasst, welche jeweils das von einem der Randstege (132, 148) berandete Strömungsfeld (124, 126) abdichten und in Kontakt mit dem jeweiligen Randsteg (132, 148) und in Kontakt mit einer der Gasdiffusionslagen (112, 114) stehen,
wobei zwei in der Stapelrichtung (104) aufeinander folgende Bipolarplatten (108a, 108b) auf einander zugewandten Seiten mit jeweils einem Randsteg (132, 148) versehen sind, der mit jeweils einem Strömungsfeld-Dichtelement (142, 150) in Kontakt steht, wobei die Strömungsfeld-Dichtelemente (142, 150), mit denen die Randstege (132, 148) der Bipolarplatten (108a, 108b) in Kontakt stehen, abdichtend aneinander anliegen, und
wobei die beiden in der Stapelrichtung (104) aufeinander folgenden Bipolarplatten (108a, 108b) im Wesentlichen identisch miteinander ausgebildet, jedoch um eine zur Stapelrichtung (104) parallele Drehachse um einen Winkel von 180° gegeneinander verdreht angeordnet sind,
**dadurch gekennzeichnet,**
**dass** die Strömungsfeld-Dichtelemente (142, 150) stoffschlüssig mit dem jeweiligen Randsteg (132, 148) und stoffschlüssig mit der jeweiligen Gasdiffusionslage (112, 114) verbunden sind.

2. Elektrochemische Vorrichtung nach Anspruch 1, **dadurch gekennzeichnet, dass** die Strömungsfeld-Dichtelemente (150) jeweils ein an den jeweiligen Randsteg (132, 148) und/oder an die jeweilige Gasdiffusionslage (112, 114) angeformtes Spritzgießteil sind oder durch ein Musterdruckverfahren an dem jeweiligen Randsteg (132, 148) und/oder an der jeweiligen Gasdiffusionslage (112, 114) erzeugt sind.

3. Elektrochemische Vorrichtung nach einem der Ansprüche 1 oder 2, **dadurch gekennzeichnet, dass** die Bipolarplatte (108) einen anodenseitigen Randsteg (148) auf ihrer Anodenseite und einen kathodenseitigen Randsteg (132) auf ihrer Kathodenseite aufweist, wobei der anodenseitige Randsteg (148) und der kathodenseitige Randsteg (132) zumindest abschnittsweise in einer senkrecht zur Stapelrichtung (104) verlaufenden Versatzrichtung (170, 196) gegeneinander versetzt sind.

4. Elektrochemische Vorrichtung nach Anspruch 3, **dadurch gekennzeichnet, dass** die Bipolarplatte (108) in einem zwischen dem anodenseitigen Randsteg (148) und dem kathodenseitigen Randsteg (132) liegenden Zwischenbereich (172) mindestens eine Durchgangsöffnung (174, 198, 218) für den Durchgang eines fluiden Mediums durch die Bipolarplatte (108) hindurch oder in einen Innenraum (186) der Bipolarplatte (108) hinein aufweist.

5. Elektrochemische Vorrichtung nach Anspruch 4, **dadurch gekennzeichnet, dass** die mindestens eine Durchgangsöffnung (174, 198, 218) in Fluidverbindung mit einem Mediumkanal (160, 164, 168) steht, welcher sich längs der Stapelrichtung (104) durch die Bipolarplatte (108) hindurch erstreckt.

6. Elektrochemische Vorrichtung nach einem der Ansprüche 1 bis 5, **dadurch gekennzeichnet, dass** mindestens eine Membran-Elektroden-Anordnung (110) mit einer Randverstärkungsanordnung (118) versehen ist, an welcher das jeweilige Strömungsfeld-Dichtelement (142, 150) abdichtend anliegt.

7. Elektrochemische Vorrichtung nach einem der Ansprüche 1 bis 6, **dadurch gekennzeichnet, dass** mindestens eine Bipolarplatte (108) mit einem Randsteg (132, 148), der mit einem Strömungsfeld-Dichtelement (142, 150) in Kontakt steht, zwei Bipolarplattenlagen (134, 146) umfasst, die längs Fügelinien (188, 190, 210, 212, 230, 236) miteinander gefügt sind.

8. Elektrochemische Vorrichtung nach Anspruch 7, **dadurch gekennzeichnet, dass** die Bipolarplattenlagen (134, 146) längs der Fügelinien (188, 190, 210, 212, 230, 236) durch Verschweißung und/oder durch Verklebung miteinander gefügt sind.

9. Elektrochemische Vorrichtung nach einem der Ansprüche 7 oder 8, **dadurch gekennzeichnet, dass** das an der Bipolarplatte (108) angeordnete Strömungsfeld-Dichtelement (142, 150) die Fügelinien (188, 190, 210, 212, 230, 236) - in der Stapelrichtung (104) gesehen - nicht überlappt.

10. Elektrochemische Vorrichtung nach einem der Ansprüche 1 bis 9, **dadurch gekennzeichnet, dass** mindestens eine Bipolarplatte (108) zwei Bipolarplattenlagen (134, 146) umfasst, die durch Erzeugen einer Dichtung, beispielsweise aus einem Elastomermaterial, an mindestens einer der Bipolarplattenlagen (134, 146) gegenüber der Umgebung abgedichtet sind.

11. Verfahren zum Herstellen einer elektrochemischen Einheit (106) für eine elektrochemische Vorrichtung (100), in welcher mehrere elektrochemische Einheiten (106) längs einer Stapelrichtung (104) aufeinander folgen,
wobei die elektrochemische Einheit (106) eine elektrochemisch aktive Membran-Elektroden-Anordnung (110), mindestens eine Gasdiffusionslage (112, 114) und eine Bipolarplatte (108) mit mindestens einem Strömungsfeld (124, 126) für mindestens ein fluides Medium umfasst und
wobei das Verfahren Folgendes umfasst:
- Anordnen der Gasdiffusionslage (112, 114) an der Bipolarplatte (108) oder an einer Bipolarplattenlage (134, 146) der Bipolarplatte (108); und
- Erzeugen eines Strömungsfeld-Dichtelements (142, 150) an der Bipolarplatte (108) oder an der Bipolarplattenlage (134, 146) und an der Gasdiffusionslage (112, 114) derart, dass das Strömungsfeld-Dichtelement (142, 150) sowohl mit der Bipolarplatte (108) oder der Bipolarplattenlage (134, 146) als auch mit der Gasdiffusionslage (112, 114) in Kontakt steht;
wobei zwei in der Stapelrichtung (104) aufeinander folgende Bipolarplatten (108a, 108b) auf einander zugewandten Seiten mit jeweils einem Randsteg (132, 148) versehen sind, der mit jeweils einem Strömungsfeld-Dichtelement (142, 150) in Kontakt steht, wobei die Strömungsfeld-Dichtelemente (142, 150), mit denen die Randstege (132, 148) der Bipolarplatten (108a, 108b) in Kontakt stehen, abdichtend aneinander anliegen, und
wobei die beiden in der Stapelrichtung (104) aufeinander folgenden Bipolarplatten (108a, 108b) im Wesentlichen identisch miteinander ausgebildet, jedoch um eine zur Stapelrichtung (104) parallele Drehachse um einen Winkel von 180° gegeneinander verdreht angeordnet sind,
**dadurch gekennzeichnet,**
**dass** die Strömungsfeld-Dichtelemente (142, 150) stoffschlüssig mit dem jeweiligen Randsteg (132, 148) und stoffschlüssig mit der jeweiligen Gasdiffusionslage (112, 114) verbunden sind.

12. Verfahren nach Anspruch 11, **dadurch gekennzeichnet, dass** die Bipolarplatte (108) mindestens einen Randsteg (132, 148) aufweist, der ein Strömungsfeld (124, 126) der Bipolarplatte (108) zumindest abschnittsweise berandet,
wobei die Gasdiffusionslage (112, 114) während der Erzeugung des Strömungsfeld-Dichtelements (142, 150) in Kontakt mit dem Randsteg (132, 148) steht.

## Claims

1. Electrochemical device, comprising
a stack of a plurality of electrochemical units (106) that succeed one another along a stacking direction (104) and each comprise an electrochemically active membrane electrode assembly (110), at least one gas diffusion layer (112, 114) and a bipolar plate (108) having at least one flow field (124, 126) for at least one fluid medium,
wherein at least one bipolar plate (108) has at least one edge web (132, 148), which borders a flow field (124, 126) of the bipolar plate (108) at least in certain areas and is in contact with a gas diffusion layer (112, 114) adjacent to the bipolar plate (108),
wherein the electrochemical device (100) further comprises flow field seal elements (142, 150) that each seal off the flow field (124, 126) bordered by one of the edge webs (132, 148) and are in contact with the respective edge web (132, 148) and in contact with one of the gas diffusion layers (112, 114),
wherein two bipolar plates (108a, 108b) that succeed one another in the stacking direction (104) are provided on mutually facing sides with a respective edge web (132, 148) that is in contact with a respective flow field seal element (142, 150), wherein the flow field seal elements (142, 150) with which the edge webs (132, 148) of the bipolar plates (108a, 108b) are in contact abut against one another in sealing manner, and wherein the two bipolar plates (108a, 108b) that succeed one another in the stacking direction (104) are configured substantially identically with one another but are arranged rotated by an angle of 180° to one another about an axis of rotation that is parallel to the stacking direction (104),
**characterized in that**
the flow field seal elements (142, 150) are connected to the respective edge web (132, 148) in a substance-to-substance bond and are connected to the respective gas diffusion layer (112, 114) in a substance-to-substance bond.

2. Electrochemical device in accordance with Claim 1, **characterized in that** the flow field seal elements (150) are each an injection moulded part that is formed onto the respective edge web (132, 148) and/or onto the respective gas diffusion layer (112, 114) or are each produced on the respective edge web (132, 148) and/or on the respective gas diffusion layer (112, 114) by a pattern printing method.

3. Electrochemical device in accordance with either of Claims 1 or 2, **characterized in that** the bipolar plate (108) has on its anode side an anode-side edge web (148) and on its cathode side a cathode-side edge web (132), wherein the anode-side edge web (148) and the cathode-side edge web (132) are offset from one another at least in certain areas, in an offset direction (170, 196) running perpendicular to the stacking direction (104).

4. Electrochemical device in accordance with Claim 3, **characterized in that** the bipolar plate (108) has, in an intermediate region (172) between the anode-side edge web (148) and the cathode-side edge web (132), at least one aperture (174, 198, 218) for a fluid medium to pass through the bipolar plate (108) or into an interior (186) of the bipolar plate (108).

5. Electrochemical device in accordance with Claim 4, **characterized in that** the at least one aperture (174, 198, 218) is in fluidic connection with a medium channel (160, 164, 168) that extends through the bipolar plate (108) along the stacking direction (104).

6. Electrochemical device in accordance with any one of Claims 1 to 5, **characterized in that** at least one membrane electrode assembly (110) is provided with an edge reinforcing arrangement (118) against which the respective flow field seal element (142, 150) abuts in sealing manner.

7. Electrochemical device in accordance with any one of Claims 1 to 6, **characterized in that** at least one bipolar plate (108) having an edge web (132, 148) that is in contact with a flow field seal element (142, 150) comprises two bipolar plate layers (134, 146) that are joined to one another along join lines (188, 190, 210, 212, 230, 236).

8. Electrochemical device in accordance with Claim 7, **characterized in that** the bipolar plate layers (134, 146) are joined to one another along the join lines (188, 190, 210, 212, 230, 236) by welding and/or by adhesion.

9. Electrochemical device in accordance with either of Claims 7 or 8, **characterized in that** the flow field seal element (142, 150) that is arranged on the bipolar plate (108) does not overlap the join lines (188, 190, 210, 212, 230, 236) - as seen in the stacking direction (104).

10. Electrochemical device in accordance with any one of Claims 1 to 9, **characterized in that** at least one bipolar plate (108) comprises two bipolar plate layers (134, 146) that are sealed off from the surroundings by producing a seal, for example made from an elastomer material, on at least one of the bipolar plate layers (134, 146).

11. Method for producing an electrochemical unit (106) for an electrochemical device (100) in which a plurality of electrochemical units (106) succeed one another along a stacking direction (104),
wherein the electrochemical unit (106) comprises an electrochemically active membrane electrode assembly (110), at least one gas diffusion layer (112, 114) and a bipolar plate (108) having at least one flow field (124, 126) for at least one fluid medium, and
wherein the method comprises the following:
- arranging the gas diffusion layer (112, 114) on the bipolar plate (108) or on a bipolar plate layer (134, 146) of the bipolar plate (108); and
- producing a flow field seal element (142, 150) on the bipolar plate (108) or on the bipolar plate layer (134, 146) and on the gas diffusion layer (112, 114) such that the flow field seal element (142, 150) is in contact both with the bipolar plate (108) or the bipolar plate layer (134, 146) and also with the gas diffusion layer (112, 114);
wherein two bipolar plates (108a, 108b) that succeed one another in the stacking direction (104) are provided on mutually facing sides with a respective edge web (132, 148) that is in contact with a respective flow field seal element (142, 150), wherein the flow field seal elements (142, 150) with which the edge webs (132, 148) of the bipolar plates (108a, 108b) are in contact abut against one another in sealing manner, and wherein the two bipolar plates (108a, 108b) that succeed one another in the stacking direction (104) are configured substantially identically with one another but are arranged rotated by an angle of 180° to one another about an axis of rotation that is parallel to the stacking direction (104),
**characterized in that**
the flow field seal elements (142, 150) are connected to the respective edge web (132, 148) in a substance-to-substance bond and are connected to the respective gas diffusion layer (112, 114) in a substance-to-substance bond.

12. Method in accordance with Claim 11, **characterized in that** the bipolar plate (108) has at least one edge web (132, 148), which borders a flow field (124, 126) of the bipolar plate (108) at least in certain areas,
wherein during production of the flow field seal element (142, 150) the gas diffusion layer (112, 114) is in contact with the edge web (132, 148).

## Revendications

1. Dispositif électrochimique comprenant
une pile de plusieurs unités (106) électrochimiques se suivant le long d'un sens d'empilage (104) qui comportent respectivement un agencement de membrane-électrodes (110) électrochimiquement actif, au moins une couche de diffusion de gaz (112, 114) et une plaque bipolaire (108) avec au moins un champ d'écoulement (124, 126) pour au moins un milieu fluide, dans lequel au moins une plaque bipolaire (108) présente au moins une nervure de bord (132, 148) qui délimite au moins par sections un champ d'écoulement (124, 126) de la plaque bipolaire (108) et est en contact avec une couche de diffusion de gaz (112, 114) contiguë à la plaque bipolaire (108), dans lequel le dispositif électrochimique (100) comporte de plus des éléments étanches de champ d'écoulement (142, 150) qui rendent étanches respectivement le champ d'écoulement (124, 126) délimité par une des nervures de bord (132, 148) et sont en contact avec la nervure de bord (132, 148) respective et en contact avec une des couches de diffusion de gaz (112, 114),
dans lequel deux plaques bipolaires (108a, 108b) se suivant dans le sens d'empilage (104) sont pourvues sur des côtés tournés l'un vers l'autre de respectivement une nervure de bord (132, 148) qui est en contact avec respectivement un élément étanche de champ d'écoulement (142, 150), dans lequel les éléments étanches de champ d'écoulement (142, 150), avec lesquels les nervures de bord (132, 148) des plaques bipolaires (108a, 108b) sont en contact, reposent par étanchéité l'un contre l'autre, et
dans lequel les deux plaques bipolaires (108a, 108b) se suivant dans le sens d'empilage (104) sont réalisées de manière sensiblement identiques entre elles, toutefois sont agencées pivotées l'une par rapport à l'autre d'un angle de 180° autour d'un axe de rotation parallèle au sens d'empilage (104),
**caractérisé en ce**
**que** les éléments étanches de champ d'écoulement (142, 150) sont reliés par matière à la nervure de bord (132, 148) respective et par matière à la couche de diffusion de gaz (112, 114) respective.

2. Dispositif électrochimique selon la revendication 1, **caractérisé en ce que** les éléments étanches de champ d'écoulement (150) sont respectivement une partie moulée par injection formée sur la nervure de bord (132, 148) respective et/ou sur la couche de diffusion de gaz (112, 114) respective ou sont générés par un procédé d'impression de modèle au niveau de la nervure de bord (132, 148) respective et/ou au niveau de la couche de diffusion de gaz (112, 114) respective.

3. Dispositif électrochimique selon l'une des revendications 1 ou 2, **caractérisé en ce que** la plaque bipolaire (108) présente une nervure de bord (148) côté anode sur son côté d'anode et une nervure de bord (132) côté cathode sur son côté de cathode, dans lequel la nervure de bord (148) côté anode et la nervure de bord (132) côté cathode sont en déport l'une par rapport à l'autre au moins par sections dans un sens de déport (170, 196) s'étendant perpendiculairement au sens d'empilage (104).

4. Dispositif électrochimique selon la revendication 3, **caractérisé en ce que** la plaque bipolaire (108) présente dans une zone intermédiaire (172) se trouvant entre la nervure de bord (148) côté anode et la nervure de bord (132) côté cathode au moins une ouverture débouchante (174, 198, 218) pour le passage d'un milieu fluide à travers la plaque bipolaire (108) ou dans un espace intérieur (186) de la plaque bipolaire (108).

5. Dispositif électrochimique selon la revendication 4, **caractérisé en ce que** l'au moins une ouverture débouchante (174, 198, 218) est en liaison fluidique avec un canal de milieu (160, 164, 168) qui s'étend le long du sens d'empilage (104) à travers la plaque bipolaire (108).

6. Dispositif électrochimique selon l'une des revendications 1 à 5, **caractérisé en ce qu'**au moins un agencement de membrane-électrodes (110) est pourvu d'un agencement de renforcement de bord (118), contre lequel l'élément étanche de champ d'écoulement (142, 150) respectif repose par étanchéité.

7. Dispositif électrochimique selon l'une des revendications 1 à 6, **caractérisé en ce qu'**au moins une plaque bipolaire (108) avec une nervure de bord (132, 148) qui est en contact avec un élément étanche de champ d'écoulement (142, 150), comporte deux couches de plaque bipolaire (134, 146) qui sont assemblées entre elles le long de lignes d'assemblage (188, 190, 210, 212, 230, 236).

8. Dispositif électrochimique selon la revendication 7, **caractérisé en ce que** les couches de plaque bipolaire (134, 146) sont assemblées le long des lignes d'assemblage (188, 190, 210, 212, 230, 236) par soudage et/ou par collage entre elles.

9. Dispositif électrochimique selon l'une des revendications 7 ou 8, **caractérisé en ce que** l'élément étanche de champ d'écoulement (142, 150) agencé au niveau de la plaque bipolaire (108) ne recouvre pas les lignes d'assemblage (188, 190, 210, 212, 230, 236) - vu dans le sens d'empilage (104).

10. Dispositif électrochimique selon l'une des revendications 1 à 9, **caractérisé en ce qu'**au moins une plaque bipolaire (108) comporte deux couches de plaque bipolaire (134, 146) qui sont rendues étanches par génération d'une garniture d'étanchéité, par exemple en un matériau d'élastomère, au niveau d'au moins une des couches de plaque bipolaire (134, 146) par rapport à l'environnement.

11. Procédé de fabrication d'une unité électrochimique (106) pour un dispositif électrochimique (100), dans laquelle plusieurs unités électrochimiques (106) se suivent le long d'un sens d'empilage (104),
dans lequel l'unité électrochimique (106) comporte un agencement de membrane-électrodes (110) actif électrochimiquement, au moins une couche de diffusion de gaz (112, 114) et une plaque bipolaire (108) avec au moins un champ d'écoulement (124, 126) pour au moins un milieu fluide et
dans lequel le procédé comporte ce qui suit :
- l'agencement de la couche de diffusion de gaz (112, 114) au niveau de la plaque bipolaire (108) ou au niveau d'une couche de plaque bipolaire (134, 146) de la plaque bipolaire (108) ; et
- la génération d'un élément étanche de champ d'écoulement (142, 150) au niveau de la plaque bipolaire (108) ou au niveau de la couche de plaque bipolaire (134, 146) et au niveau de la couche de diffusion de gaz (112, 114) de telle manière que l'élément étanche de champ d'écoulement (142, 150) soit en contact non seulement avec la plaque bipolaire (108) ou la couche de plaque bipolaire (134, 146), mais aussi avec la couche de diffusion de gaz (112, 114) ;
dans lequel deux plaques bipolaires (108a, 108b) se suivant dans le sens d'empilage (104) sont pourvues sur des côtés tournés l'un vers l'autre de respectivement une nervure de bord (132, 148) qui est en contact avec respectivement un élément étanche de champ d'écoulement (142, 150), dans lequel les éléments étanches de champ d'écoulement (142, 150), avec lesquels les nervures de bord (132, 148) des plaques bipolaires (108a, 108b) sont en contact, reposent par étanchéité l'un contre l'autre, et
dans lequel les deux plaques bipolaires (108a, 108b) se suivant dans le sens d'empilage (104) sont réalisées de manière sensiblement identique entre elles, toutefois sont agencées pivotées l'une par rapport à l'autre d'un angle de 180° autour d'un axe de rotation parallèle au sens d'empilage (104),
**caractérisé en ce**
**que** les éléments étanches de champ d'écoulement (142, 150) sont reliés par matière à la nervure de bord (132, 148) respective et par matière à la couche de diffusion de gaz (112, 114) respective.

12. Procédé selon la revendication 11, **caractérisé en ce que** la plaque bipolaire (108) présente au moins une nervure de bord (132, 148) qui délimite un champ d'écoulement (124, 146) de la plaque bipolaire (108) au moins par sections,
dans lequel la couche de diffusion de gaz (112, 114) est en contact pendant la génération de l'élément étanche de champ d'écoulement (142, 150) avec la nervure de bord (132, 148).
